(19) Europäisches Patentamt
European Patent Office
Office européen des brevets

(11) EP 1 371 712 B1

(12) EUROPEAN PATENT SPECIFICATION

(45) Date of publication and mention of the grant of the patent:
**11.04.2007 Bulletin 2007/15**

(21) Application number: **02711421.4**

(22) Date of filing: **08.02.2002**

(51) Int Cl.:
*C09K 19/14 (2006.01)* *C09K 19/30 (2006.01)*
*C09K 19/32 (2006.01)* *C09K 19/54 (2006.01)*
*G02F 1/13 (2006.01)* *C09K 19/20 (2006.01)*
*C09K 19/18 (2006.01)*

(86) International application number:
**PCT/JP2002/001095**

(87) International publication number:
**WO 2002/062921 (15.08.2002 Gazette 2002/33)**

(54) **LIQUID-CRYSTAL COMPOSITION CONTAINING OPTICALLY ACTIVE COMPOUND AND LIQUID-CRYSTAL ELECTROOPTIC ELEMENT**

FLÜSSIGKRISTALLINE ZUSAMMENSETZUNG, ENTHALTEND OPTISCH AKTIVE VERBINDUNG UND FLÜSSIGKRISTALLINES ELEKTROOPTISCHES ELEMENT

COMPOSITION DE CRISTAUX LIQUIDES CONTENANT UN COMPOSE OPTIQUEMENT ACTIF ET ELEMENT ELECTRO-OPTIQUE A CRISTAUX LIQUIDES

(84) Designated Contracting States:
**AT BE CH CY DE DK ES FI FR GB GR IE IT LI LU MC NL PT SE TR**

(30) Priority: **08.02.2001 JP 2001032682**
**12.10.2001 JP 2001315739**
**07.12.2001 JP 2001373886**

(43) Date of publication of application:
**17.12.2003 Bulletin 2003/51**

(60) Divisional application:
**06000505.5 / 1 650 285**
**06000506.3 / 1 650 286**
**06000533.7 / 1 650 284**

(73) Proprietor: **SEIMI CHEMICAL CO., LTD.**
**Chigasaki-city,**
**Kanagawa, 253-8585 (JP)**

(72) Inventors:
- **YOKOKOUJI, Osamu,**
**Seimi Chemical Co., Ltd.**
**Chigasaki-city, Kanagawa 253-8585 (JP)**
- **TACHIBANA, Tamon,**
**Seimi Chemical Co., Ltd.**
**Chigasaki-city, Kanagawa 253-8585 (JP)**
- **OIWA, Masaki,**
**Seimi Chemical Co., Ltd.**
**Chigasaki-city, Kanagawa 253-8585 (JP)**
- **SHIMIZU, Kanetaka,**
**Seimi Chemical Co., Ltd.**
**Chigasaki-city, Kanagawa 253-8585 (JP)**
- **KOIKE, Takeshi,**
**Seimi Chemical Co., Ltd.**
**Chigasaki-city, Kanagawa 253-8585 (JP)**

(74) Representative: **Müller-Boré & Partner**
**Patentanwälte**
**Grafinger Strasse 2**
**81671 München (DE)**

(56) References cited:
**EP-A- 0 311 329** **EP-A- 0 315 193**
**EP-A1- 0 217 354** **WO-A1-95/14067**
**JP-A- 5 170 679** **JP-A- 8 245 960**
**JP-A- 2002 080 413** **US-A- 5 209 867**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

TECHNICAL FIELD

The present invention relates to a liquid crystal composition containing a novel optically active compound, and a liquid crystal electro-optical element employing the liquid crystal composition.

BACKGROUND ART

Liquid crystal electro-optical elements are used for various applications such as not only display devises for office automation equipment, but also measuring devices, automotive instruments, display devices for home electric appliance, clocks and desk-top calculators.

A liquid crystal electro-optical element has such a structure that a pair of substrates, at least one of the substrates having a transparent electrode, an intermediate protective film and a liquid crystal alignment film formed on its surface, is disposed with a certain distance, and a liquid crystal material is enclosed between the substrates, and it functions as an optical switching element by applying a voltage from the electrode to the liquid crystal material to change the alignment state of the liquid crystal material thereby to change its optical properties.

For twisted nematic (TN) and super twisted nematic (STN) liquid crystal electro-optical elements, a liquid crystal composition having a small amount of an optically active compound (chiral agent) added thereto is employed to achieve uniform twist alignment.

Optically active compounds widely used at present may, for example, be a compound of the following formula (CN), a compound of the following formula (CB-15) and a compound of the following formula (R-811). Further, a liquid crystal composition having an optically active compound added thereto is employed also for a reflective cholesteric (chiral nematic) liquid crystal element.

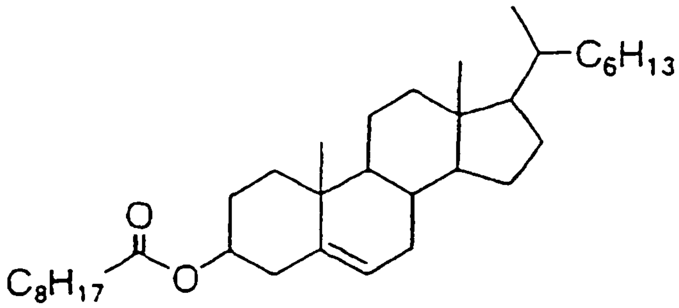

CN

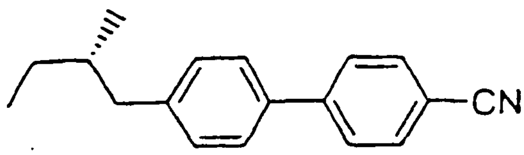

CB-15

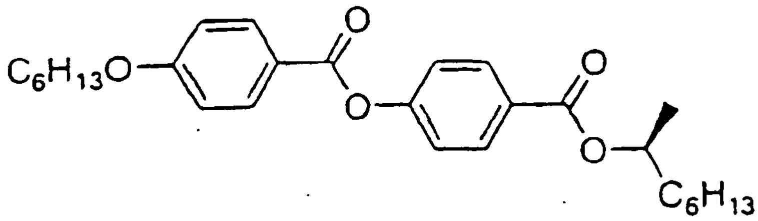

R-811

However, a cholesteric liquid crystal (chiral nematic liquid crystal) composition has a high viscosity, and thus it has such problems as a low speed of response and a high driving voltage, since a large amount of the optically active compound is added thereto. There is a corelation between the driving voltage of a liquid crystal element and the dielectric anisotropy ($\Delta\varepsilon$) of a liquid crystal composition, and a liquid crystal composition having a high dielectric anisotropy can be driven at a low driving voltage. In order to make a reflective cholesteric (chiral nematic) liquid crystal element be driven at a low voltage, an optically active compound having a high dielectric anisotropy as well as a nematic liquid crystal composition having a high dielectric anisotropy has been required.

The applicant has proposed an optically active compound having a low viscosity and a high helical twisting power in JP-A-11-255675. However, the helical twisting power of the optically active compounds as specifically disclosed in JP-A-11-255675 is insufficient particularly for a reflective cholesteric (chiral nematic) liquid crystal element, and thus a higher helical twisting power is required, and further, optically active compounds having a high dielectric anisotropy which have not been realized in JP-A-11-255675 are required.

The helical pitch length induced when an optically active compound is added to a liquid crystal composition is determined by the helical twisting power characteristic to the compound. The smaller the helical twisting power of an optically active compound, the longer the helical pitch length induced, and the addition amount has to be increased to shorten the helical pitch length. In general, if the addition amount of the optically active compound is increased, performances as a liquid crystal material tend to decrease, as compared with before addition and problems are caused such as an increase in the viscosity, a decrease in the speed of response, an increase in the driving voltage, a decrease in the isotropic phase transition temperature and a reduction of the temperature range at which a specific phase such as a nematic phase or a cholesteric phase is shown. Thus, an optically active compound having a high helical twisting power has been required.

In order to overcome such objects, JP-A-10-251185 proposes optically active compounds having a low viscosity and a high helical twisting power.

In recent years, attention has been paid to a reflective cholesteric liquid crystal element employing a cholesteric liquid crystal composition having a large amount (at a level of from 10 to 30 wt%) of an optically active compound added to a nematic liquid crystal composition, and utilizing such a phenomenon that the cholesteric liquid crystal selectively reflects light having a wavelength equal to the product of the average reflective index of the liquid crystal material and the helical pitch length. The reflective cholesteric liquid crystal element has a high efficiency of light since no deflecting plate or color filter is required, and a higher brightness can be obtained when a liquid crystal composition having a higher reflective index anisotropy ($\Delta n$) is employed. Further, a voltage has to be applied only when the changeover of display (writing) since the display state is maintained (memory properties), whereby the element consumes only a low electric power. However, since a large amount of an optically active compound is added, the cholesteric liquid crystal composition has a high viscosity, whereby there are problems such as a low speed of response and a high driving voltage. In order to overcome such problems, an optically active compound which has a helical twisting power higher than that of the optically active compounds as disclosed in JP-A-10-251185, and which provides an aimed helical pitch length even by addition in a small amount, has been required.

Further, many of practicable liquid crystal compositions are prepared by mixing at least one compound having a nematic phase in the vicinity of room temperature and at least one compound having a nematic phase in a temperature region higher than room temperature. Further, in recent years, along with diversification of products to which liquid crystal electro-optical elements are applied, a liquid crystal composition having an increased operating temperature range to the high temperature side has been required, and accordingly, particularly a liquid crystal composition having a high transition temperature from the liquid crystal phase to the isotropic phase [hereinafter referred to as clear point (Tc)] has been required.

Accordingly, an optically active compound which, when added to a liquid crystal composition, does not lower the clear point (Tc) of the liquid crystal composition has been required.

EP-A-0 311 329 describes optically active 1-(2-halogen-substituted-phenyl)-ethanols and derivatives thereof for use in liquid crystal compositions.

EP-A-0 315 193 describes an optically active compound and a chiral liquid crystal composition containing the same.

US-patent 5,209,867 describes novel derivatives of aromatic carboxylic acid esters which are useful as a dopant for liquid crystal compositions, and smectic liquid crystal compositions containing at least one of said derivatives.

EP-A-0 217 354 describes an optically active tolan derivative which is useful as an electro-optical display material.

JP-A-08-245960 describes a liquid crystal composition comprising a specific monofunctional polymerizable chiral monomer and an unpolymerizable nematic liquid crystal compound, wherein the liquid crystal composition is capable of regulating its intrinsic pitch within a wide range of temperatures.

WO-A-95/14067 describes a chiral nematic liquid crystalline composition comprising a glassy chiral nematic compound of low molar mass that includes a cycloaliphatic radical, a nematogenic moiety, and a chiral moiety, or a mixture of a nematic liquid crystalline compound of low molar mass that includes a cycloaliphatic radical and a nematogenic moiety and a chiral compound of low molar mass that includes a chiral moiety.

JP-05-170679 describes a monofluoroalkane derivative and a liquid crystal composition.

It is an object of the present invention to provide a liquid crystal composition which contains a novel optically active compound having a high helical twisting power, having a high dielectric anisotropy ($\Delta\varepsilon$) and providing excellent performances also as a chiral agent, and which can be driven at a low voltage, and a liquid crystal element employing the liquid crystal composition, particularly a STN or cholesteric (chiral nematic) liquid crystal element.

DISCLOSURE OF THE INVENTION

Under these circumstances, the present invention has been accomplished to overcome the above problems, and provides a liquid crystal composition containing at least an optically active compound of the following formula (4) (C* is asymmetric carbon):

(4)

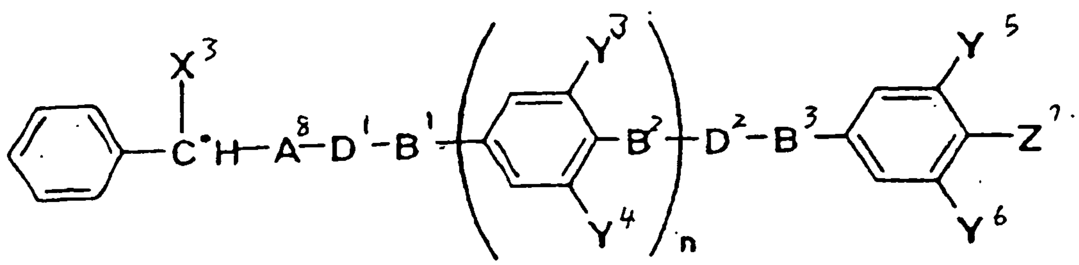

wherein $A^8$ is $CH_2$- or CO-,

each of $B^1$, $B^2$ and $B^3$ which are independent of one another, is -COO-, -OCO-, $-CH_2CH_2-$, $-CH_2O-$, $OCH_2-$, -CF=CF-, $-CF_2O-$ or a single bond,

each of $D^1$ and $D^2$ which are independent of each other, is a non-substituted 1,4-phenylene group, a non-substituted trans-1,4-cyclohexylene group or a single bond,

$X^3$ is $-CH_3$, $-CHF_2$, $-CH_2F$, $-CF_3$ or a fluorine atom,

each of $Y^3$, $Y^4$, $Y^5$ and $Y^6$ which are independent of one another, is a fluorine atom or a hydrogen atom, provided that one of $Y^3$, $Y^4$, $Y^5$ and $Y^6$ is a fluorine atom,

$Z^7$ is -CN, $-CF_3$, $-OCF_3$, $-SF_5$ or a fluorine atom, and

n is 0 or 1.

Explanation regarding the optically active compound of the above formula (4)

The compounds of the formula (4) are optically active compounds containing asymmetric carbon (C*) in their structures. The absolute configuration of the group which is bonded to the asymmetric carbon may be either R or S.

In the compounds (4), $A^8$ is $-CH_2$- or -CO-. Particularly, $-CH_2$- is preferred in view of stability and reliability of the compound.

Each of $B^1$, $B^2$ and $B^3$ which are independent of one another, is -COO-, -OCO-, $-CH_2CH_2-$, $-CH_2O-$, $-OCH_2-$, -CF=CF-, $-CF_2O-$ or a single bond. Among them, -COO- is preferred in view of the degree of the dielectric anisotropy, and a single bond is particularly preferred in view of stability and reliability of the compound.

Each of $D^1$ and $D^2$ which are independent of each other, is non-substituted 1,4-phenyl group, a non-substituted trans-1,4-cyclohexylene group or a single bond. Among them, a single bond is particularly preferred in view of low viscosity.
$X^3$ is -$CH_3$, -$CHF_2$, -$CH_2F$, -$CF_3$ or a fluorine atom. Among them, -$CH_3$ is particularly preferred in view of the degree of the helical twisting power.
Each of $Y^3$ , $Y^4$, $Y^5$ and $Y^6$ which are independent of one another, is a fluorine atom or a hydrogen atom. Here, one of $Y^3$, $Y^4$, $Y^5$ and $Y^6$ is a fluorine atom. Particularly, at least one of $Y^5$ and $Y^6$ is a fluorine atom in view of the degree of the dielectric anisotropy, and particularly preferably both $Y^5$ and $Y^6$ are fluorine atoms.
$Z^7$ is -CN, -$CF_3$, -$OCF_3$, -$SF_5$ or a fluorine atom. Among them, a fluorine atom or -$CF_3$ is preferred in view of stability and reliability of the compound, and -CN is particularly preferred in view of the degree of the dielectric anisotropy.
n is 0 or 1. It is preferably 1 in view of the degree of the dielectric anisotropy.
One or at least two types of the optically active compound (4) of the present invention may be employed as the liquid crystal material. In a case where at least two types of the compounds (4) are employed, it is preferred to combine ones having the same helical directions induced when added to the liquid crystal composition.
Now, specific examples of the optically active compound (4) of the present invention will be explained below. In the present specification, -Cy- represents a non-substituted trans-1,4-cyclohexylene group, -Ph- represents a non-substituted 1,4-phenylene group, -$Ph^F$- represents a 2-fluoro-1,4-phenylene group (Formula (4-5)), and -$Ph^{FF}$- represents a 2,6-difluoro-1,4-phenylene group (formula (4-6)). In the formulae (4-5) and (4-6), the side close to Z is taken as the 1-position, and the position of the fluorine substituent is as shown in the following formulae. These formulae will generically be referred to as "ring group". In the formula (4), the number of the ring group is preferably from 2 to 5, and it is preferably 3 or 4 in view of the phase transition temperature and a low viscosity, particularly preferably 3.

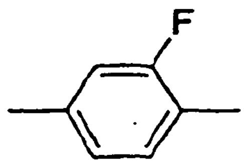

(4-6)

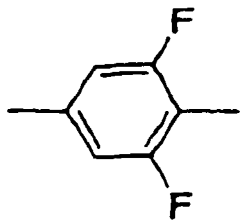

(4-5)

Now, specific examples of the compound of the formula (4) are classified by the number of ring groups and the type of $Z^3$, and exemplified below. In the present specification, the asymmetric carbon atom will sometimes be referred to simply as C.

Specific examples of the compound wherein the number of ring groups is 3

As preferred specific examples of the compound wherein Z=CN, the following compounds may be mentioned.

H-PH-CH($CH_3$)-$CH_2$-Ph-$PH^F$-CN

H-Ph-CH($CH_3$)-$CH_2$-$Ph^F$-Ph-CN

H-Ph-CH($CH_3$)-$CH_2$-Ph-$Ph^{FF}$-CN

H-Ph-CH($CH_3$)-$CH_2$-$Ph^{FF}$-Ph-CN

H-Ph-CH($CH_3$)-$CH_2$-$Ph^F$-$Ph^F$-CN

H-Ph-CH($CH_3$)-$CH_2$-$Ph^F$-$Ph^{FF}$-CN

H-PH-CH($CH_3$)-$CH_2$-$Ph^{FF}$-$Ph^F$-CN

$H\text{-}Ph\text{-}CH(CH_3)\text{-}CH_2\text{-}Ph^{FF}\text{-}Ph^{FF}\text{-}CN$

$H\text{-}Ph\text{-}CH(CF_3)\text{-}CH_2\text{-}Ph\text{-}Ph^{FF}\text{-}CN$

$H\text{-}Ph\text{-}CHF\text{-}CH_2\text{-}Ph\text{-}Ph^{FF}\text{-}CN$

$H\text{-}Ph\text{-}CH(CH_3)\text{-}CO\text{-}Ph\text{-}Ph^{FF}\text{-}CN$

$H\text{-}Ph\text{-}CH(CF_3)\text{-}CO\text{-}Ph\text{-}Ph^{FF}\text{-}CN$

$H\text{-}Ph\text{-}CH(CH_3)\text{-}CH_2\text{-}Ph\text{-}COO\text{-}Ph^{F}\text{-}CN$

$H\text{-}Ph\text{-}CH(CH_3)\text{-}CH_2\text{-}Ph^{F}\text{-}COO\text{-}Ph\text{-}CN$

$H\text{-}Ph\text{-}CH(CH_3)\text{-}CH_2\text{-}Ph\text{-}COO\text{-}Ph^{FF}\text{-}CN$

$H\text{-}Ph\text{-}CH(CH_3)\text{-}CH_2\text{-}Ph^{FF}\text{-}COO\text{-}Ph\text{-}CN$

$H\text{-}Ph\text{-}CH(CH_3)\text{-}CH_2\text{-}Ph^{F}\text{-}COO\text{-}Ph^{F}\text{-}CN$

$H\text{-}Ph\text{-}CH(CH_3)\text{-}CH_2\text{-}Ph^{F}\text{-}COO\text{-}Ph^{FF}\text{-}CN$

$H\text{-}Ph\text{-}CH(CH_3)\text{-}CH_2\text{-}Ph^{FF}\text{-}COO\text{-}Ph^{F}\text{-}CN$

$H\text{-}Ph\text{-}CH(CH_3)\text{-}CH_2\text{-}Ph^{FF}\text{-}COO\text{-}Ph^{FF}\text{-}CN$

$H\text{-}Ph\text{-}CH(CF_3)\text{-}CH_2\text{-}Ph\text{-}COO\text{-}Ph^{FF}\text{-}CN$

$H\text{-}Ph\text{-}CHF\text{-}CH_2\text{-}Ph\text{-}COO\text{-}Ph^{FF}\text{-}CN$

$H\text{-}Ph\text{-}CH(CH_3)\text{-}CO\text{-}Ph\text{-}COO\text{-}PH^{FF}\text{-}CN$

$H\text{-}Ph\text{-}CH(CF_3)\text{-}CO\text{-}Ph\text{-}COO\text{-}Ph^{FF}\text{-}CN$

$H\text{-}Ph\text{-}CH(CH_3)\text{-}CH_2\text{-}Ph\text{-}OCO\text{-}Ph^{F}\text{-}CN$

$H\text{-}Ph\text{-}CH(CH_3)\text{-}CH_2\text{-}Ph^{F}\text{-}OCO\text{-}Ph\text{-}CN$

$H\text{-}Ph\text{-}CH(CH_3)\text{-}CH_2\text{-}Ph\text{-}OCO\text{-}Ph^{FF}\text{-}CN$

$H\text{-}Ph\text{-}CH(CH_3)\text{-}CH_2\text{-}Ph^{FF}\text{-}OCO\text{-}Ph\text{-}CN$

$H\text{-}Ph\text{-}CH(CH_3)\text{-}CH_2\text{-}Ph^{F}\text{-}OCO\text{-}Ph^{F}\text{-}CN$

$H\text{-}Ph\text{-}CH(CH_3)\text{-}CH_2\text{-}Ph^{F}\text{-}OCO\text{-}Ph^{FF}\text{-}CN$

$H\text{-}Ph\text{-}CH(CH_3)\text{-}CH_2\text{-}Ph^{FF}\text{-}OCO\text{-}Ph^{F}\text{-}CN$

$H\text{-}Ph\text{-}CH(CH_3)\text{-}CH_2\text{-}Ph^{FF}\text{-}OCO\text{-}Ph^{FF}\text{-}CN$

$H\text{-}Ph\text{-}CH(CF_3)\text{-}CH_2\text{-}Ph\text{-}OCO\text{-}Ph^{FF}\text{-}CN$

$H\text{-}Ph\text{-}CHF\text{-}CH_2\text{-}Ph\text{-}OCO\text{-}Ph^{FF}\text{-}CN$

$H\text{-}Ph\text{-}CH(CH_3)\text{-}CO\text{-}Ph\text{-}OCO\text{-}Ph^{FF}\text{-}CN$

$H\text{-}Ph\text{-}CH(CF_3)\text{-}CO\text{-}Ph\text{-}OCO\text{-}Ph^{FF}\text{-}CN$

$H-Ph-CH(CH_3)-CH_2-Ph-CH_2CH_2-Ph^F-CN$

$H-Ph-CH(CH_3)-CH_2-Ph^F-CH_2CH_2-Ph-CN$

$H-Ph-CH(CH_3)-CH_2-Ph-CH_2CH_2-Ph^{FF}-CN$

$H-Ph-CH(CH_3)-CH_2-Ph^{FF}-CH_2CH_2-Ph-CN$

$H-Ph-CH(CH_3)-CH_2-Ph^F-CH_2CH_2-Ph^F-CN$

$H-Ph-CH(CH_3)-CH_2-Ph^F-CH_2CH_2-Ph^{FF}-CN$

$H-Ph-CH(CH_3)-CH_2-Ph^{FF}-CH_2CH_2-Ph^F-CN$

$H-Ph-CH(CH_3)-CH_2-Ph^{FF}-CH_2CH_2-Ph^{FF}-CN$

$H-Ph-CH(CF_3)-CH_2-Ph-CH_2CH_2-Ph^{FF}-CN$

$H-Ph-CHF-CH_2-Ph-CH_2CH_2-Ph^{FF}-CN$

$H-Ph-CH(CH_3)-CO-Ph-CH_2CH_2-Ph^{FF}-CN$

$H-Ph-CH(CF_3)-CO-Ph-CH_2CH_2-Ph^{FF}-CN$

$H-Ph-CH(CH_3)-CH_2-Ph-CH_2O-Ph^F-CN$

$H-Ph-CH(CH_3)-CH_2-Ph^F-CH_2O-Ph-CN$

$H-Ph-CH(CH_3)-CH_2-Ph-CH_2O-Ph^{FF}-CN$

$H-Ph-CH(CH_3)-CH_2-Ph^{FF}-CH_2O-Ph-CN$

$H-Ph-CH(CH_3)-CH_2-Ph^F-CH_2O-Ph^F-CN$

$H-Ph-CH(CH_3)-CH_2-Ph^F-CH_2O-Ph^{FF}-CN$

$H-Ph-CH(CH_3)-CH_2-Ph^{FF}-CH_2O-Ph^F-CN$

$H-Ph-CH(CH_3)-CH_2-Ph^{FF}-CH_2O-Ph^{FF}-CN$

$H-Ph-CH(CF_3)-CH_2-Ph-CH_2O-Ph^{FF}-CN$

$H-Ph-CHF-CH_2-Ph-CH_2O-Ph^{FF}-CN$

$H-Ph-CH(CH_3)-CO-Ph-CH_2O-Ph^{FF}-CN$

$H-Ph-CH(CF_3)-CO-Ph-CH_2O-Ph^{FF}-CN$

$H-Ph-CH(CH_3)-CH_2-Ph-OCH_2-Ph^F-CN$

$H-Ph-CH-(CH_3)-CH_2-Ph^F-OCH_2-Ph-CN$

$H-Ph-CH(CH_3)-CH_2-Ph-OCH_2-Ph^{FF}-CN$

$H-Ph-CH(CH_3)-CH_2-Ph^{FF}-OCH_2-Ph-CN$

$H-Ph-CH(CH_3)-CH_2-Ph^F-OCH_2-Ph^F-CN$

$H-Ph-CH(CH_3)-CH_2-Ph^{F}-OCH_2-Ph^{FF}-CN$

$H-Ph-CH(CH_3)-CH_2-Ph^{FF}-OCH_2-Ph^{F}-CN$

$H-Ph-CH(CH_3)-CH_2-Ph^{FF}-OCH_2-Ph^{FF}-CN$

$H-Ph-CH(CF_3)-CH_2-Ph-OCH_2-Ph^{FF}-CN$

$H-Ph-CHF-CH_2-Ph-OCH_2-Ph^{FF}-CN$

$H-Ph-CH(CH_3)-CO-Ph-OCH_2-Ph^{FF}-CN$

$H-Ph-CH(CF_3)-CO-Ph-OCH_2-Ph^{FF}-CN$

$H-Ph-CH(CH_3)-CH_2-Ph-CF=CF-Ph^{F}-CN$

$H-Ph-CH(CH_3)-CH_2-Ph^{F}-CF=CF-Ph-CN$

$H-Ph-CH(CH_3)-CH_2-Ph-CF=CF-Ph^{FF}-CN$

$H-Ph-CH(CH_3)-CH_2-Ph^{FF}-CF=CF-Ph-CN$

$H-Ph-CH(CH_3)-CH_2-Ph^{F}-CF=CF-Ph^{F}-CN$

$H-Ph-CH(CH_3)-CH_2-Ph^{F}-CF=CF-Ph^{FF}-CN$

$H-Ph-CH(CH_3)-CH_2-Ph^{FF}-CF=CF-Ph^{F}-CN$

$H-Ph-CH(CH_3)-CH_2-Ph^{FF}-CF=CF-Ph^{FF}-CN$

$H-Ph-CH(CF_3)-CH_2-Ph-CF=CF-Ph^{FF}-CN$

$H-Ph-CHF-CH_2-Ph-CF=CF-Ph^{FF}-CN$

$H-Ph-CH(CH_3)-CO-Ph-CF=CF-Ph^{FF}-CN$

$H-Ph-CH(CF_3)-CO-Ph-CF=CF-Ph^{FF}-CN$

$H-Ph-CH(CH_3)-CH_2-Ph-CF_2O-Ph^{F}-CN$

$H-Ph-CH(CH_3)-CH_2-Ph^{F}-CF_2O-Ph-CN$

$H-Ph-CH(CH_3)-CH_2-Ph-CF_2O-Ph^{FF}-CN$

$H-Ph-CH(CH_3)-CH_2-Ph^{FF}-CF_2O-Ph-CN$

$H-Ph-CH(CH_3)-CH_2-Ph^{F}-CF_2O-Ph^{F}-CN$

$H-Ph-CH(CH_3)-CH_2-Ph^{F}-CF_2O-Ph^{FF}-CN$

$H-Ph-CH(CH_3)-CH_2-Ph^{FF}-CF_2O-Ph^{F}-CN$

$H-Ph-CH(CH_3)-CH_2-Ph^{FF}-CF_2O-Ph^{FF}-CN$

$H-Ph-CH(CF_3)-CH_2-Ph-CF_2O-Ph^{FF}-CN$

$H-Ph-CHF-CH_2-Ph-CF_2O-Ph^{FF}-CN$

$H\text{-}Ph\text{-}CH(CH_3)\text{-}CO\text{-}Ph\text{-}CF_2O\text{-}Ph^{FF}\text{-}CN$

$H\text{-}Ph\text{-}CH(CF_3)\text{-}CO\text{-}Ph\text{-}CF_2O\text{-}Ph^{FF}\text{-}CN$

As preferred specific examples of the compound wherein $Z=CF_3$, the following compounds may be mentioned. $H\text{-}Ph\text{-}CH(CH_3)\text{-}CH_2\text{-}Ph\text{-}Ph^{F}\text{-}CF_3$

$H\text{-}Ph\text{-}CH(CH_3)\text{-}CH_2\text{-}Ph^{F}\text{-}Ph\text{-}CF_3$

$H\text{-}Ph\text{-}CH(CH_3)\text{-}CH_2\text{-}Ph\text{-}Ph^{FF}\text{-}CF_3$

$H\text{-}Ph\text{-}CH(CH_3)\text{-}CH_2\text{-}Ph^{FF}\text{-}Ph\text{-}CF_3$

$H\text{-}Ph\text{-}CH(CH_3)\text{-}CH_2\text{-}Ph^{F}\text{-}Ph^{F}\text{-}CF_3$

$H\text{-}Ph\text{-}CH(CH_3)\text{-}CH_2\text{-}Ph^{F}\text{-}Ph^{FF}\text{-}CF_3$

$H\text{-}Ph\text{-}CH(CH_3)\text{-}CH_2\text{-}Ph^{FF}\text{-}Ph^{F}\text{-}CF_3$

$H\text{-}Ph\text{-}CH(CH_3)\text{-}CH_2\text{-}Ph^{FF}\text{-}Ph^{FF}\text{-}CF_3$

$H\text{-}Ph\text{-}CH(CF_3)\text{-}CH_2\text{-}Ph\text{-}Ph^{FF}\text{-}CF_3$

$H\text{-}Ph\text{-}CHF\text{-}CH_2\text{-}Ph\text{-}Ph^{FF}\text{-}CF_3$

$H\text{-}Ph\text{-}CH(CH_3)\text{-}CO\text{-}Ph\text{-}Ph^{FF}\text{-}CF_3$

$H\text{-}Ph\text{-}CH(CF_3)\text{-}CO\text{-}Ph\text{-}Ph^{FF}\text{-}CF_3$

$H\text{-}Ph\text{-}CH(CH_3)\text{-}CH_2\text{-}Ph\text{-}COO\text{-}Ph^{F}\text{-}CF_3$

$H\text{-}Ph\text{-}CH(CH_3)\text{-}CH_2\text{-}Ph^{F}\text{-}COO\text{-}Ph\text{-}CF_3$

$H\text{-}PH\text{-}CH(CH_3)\text{-}CH_2\text{-}Ph\text{-}COO\text{-}Ph^{FF}\text{-}CF_3$

$H\text{-}Ph\text{-}CH(CH_3)\text{-}CH_2\text{-}Ph^{FF}\text{-}COO\text{-}Ph\text{-}CF_3$

$H\text{-}Ph\text{-}CH(CH_3)\text{-}CH_2\text{-}Ph^{F}\text{-}COO\text{-}Ph^{F}\text{-}CF_3$

$H\text{-}Ph\text{-}CH(CH_3)\text{-}CH_2\text{-}Ph^{F}\text{-}COO\text{-}Ph^{FF}\text{-}CF_3$

$H\text{-}Ph\text{-}CH(CH_3)\text{-}CH_2\text{-}Ph^{FF}\text{-}COO\text{-}Ph^{F}\text{-}CF_3$

$H\text{-}Ph\text{-}CH(CH_3)\text{-}CH_2\text{-}Ph^{FF}\text{-}COO\text{-}Ph^{FF}\text{-}CF_3$

$H\text{-}Ph\text{-}CH(CF_3)\text{-}CH_2\text{-}Ph\text{-}COO\text{-}Ph^{FF}\text{-}CF_3$

$H\text{-}Ph\text{-}CHF\text{-}CH_2\text{-}Ph\text{-}COO\text{-}Ph^{FF}\text{-}CF_3$

$H\text{-}Ph\text{-}CH(CH_3)\text{-}CO\text{-}Ph\text{-}COO\text{-}Ph^{FF}\text{-}CF_3$

$H\text{-}Ph\text{-}CH(CF_3)\text{-}CO\text{-}Ph\text{-}COO\text{-}Ph^{FF}\text{-}CF_3$

$H\text{-}Ph\text{-}CH(CH_3)\text{-}CH_2\text{-}Ph\text{-}OCO\text{-}Ph^{F}\text{-}CF_3$

$H\text{-}Ph\text{-}CH(CH_3)\text{-}CH_2\text{-}Ph^{F}\text{-}OCO\text{-}Ph\text{-}CF_3$

$H-Ph-CH(CH_3)-CH_2-Ph-OCO-Ph^{FF}-CF_3$

$H-Ph-CH(CH_3)-CH_2-Ph^{FF}-OCO-Ph-CF_3$

$H-Ph-CH(CH_3)-CH_2-Ph^{F}-OCO-Ph^{F}-CF_3$

$H-Ph-CH(CH_3)-CH_2-Ph^{F}-OCO-Ph^{FF}-CF_3$

$H-Ph-CH(CH_3)-CH_2-Ph^{FF}-OCO-Ph^{F}-CF_3$

$H-Ph-CH(CH_3)-CH_2-Ph^{FF}-OCO-Ph^{FF}-CF_3$

$H-Ph-CH(CF_3)-CH_2-Ph-OCO-Ph^{FF}-CF_3$

$H-Ph-CHF-CH_2-Ph-OCO-Ph^{FF}-CF_3$

$H-Ph-CH(CH_3)-CO-Ph-OCO-Ph^{FF}-CF_3$

$H-Ph-CH(CF_3)-CO-Ph-OCO-Ph^{FF}-CF_3$

$H-Ph-CH(CH_3)-CH_2-Ph-CH_2CH_2-Ph^{F}-CF_3$

$H-Ph-CH(CH_3)-CH_2-Ph^{F}-CH_2CH_2-Ph-CF_3$

$H-Ph-CH(CH_3)-CH_2-Ph-CH_2CH_2-Ph^{FF}-CF_3$

$H-Ph-CH(CH_3)-CH_2Ph^{FF}-CH_2CH_2-Ph-CF_3$

$H-Ph-CH(CH_3)-CH_2-Ph^{F}-CH_2CH_2-Ph^{F}-CF_3$

$H-Ph-CH(CH_3)-CH_2-Ph^{F}-CH_2CH_2-Ph^{FF}-CF_3$

$H-Ph-CH(CH_3)-CH_2-Ph^{FF}-CH_2CH_2-Ph^{F}-CF_3$

$H-Ph-CH(CH_3)-CH_2-Ph^{FF}-CH_2CH_2-Ph^{FF}-CF_3$

$H-Ph-CH(CF_3)-CH_2-Ph-CH_2CH_2-Ph^{FF}-CF_3$

$H-Ph-CHF-CH_2-Ph-CH_2CH_2-Ph^{FF}-CF_3$

$H-Ph-CH(CH_3)-CO-Ph-CH_2CH_2-Ph^{FF}-CF_3$

$H-Ph-CH(CF_3)-CO-Ph-CH_2CH_2-Ph^{FF}-CF_3$

$H-Ph-CH(CH_3)-CH_2-Ph-CH_2O-Ph^{F}-CF_3$

$H-Ph-CH(CH_3)-CH_2-Ph^{F}-CH_2O-Ph-CF_3$

$H- Ph-CH(CH_3)-CH_2-Ph-CH_2O-Ph^{FF}-CF_3$

$H-Ph-CH(CH_3)-CH_2-Ph^{FF}-CH_2O-Ph-CF_3$

$H-Ph-CH(CH_3)-CH_2-Ph^{F}-CH_2O-Ph^{F}-CF_3$

$H-Ph-CH(CH_3)-CH_2-Ph^{F}-CH_2O-Ph^{FF}-CF_3$

$H-Ph-CH(CH_3)-CH_2-Ph^{FF}-CH_2O-Ph^{F}-CF_3$

$H-Ph-CH(CH_3)-CH_2-Ph^{FF}-CH_2O-Ph^{FF}-CF_3$

$H-Ph-CH(CF_3)-CH_2-Ph-CH_2O-Ph^{FF}-CF_3$

$H-Ph-CHF-CH_2-Ph-CH_2O-Ph^{FF}-CF_3$

$H-Ph-CH(CH_3)-CO-Ph-CH_2O-Ph^{FF}-CF_3$

$H-Ph-CH(CF_3)-CO-Ph-CH_2O-Ph^{FF}-CF_3$

$H-Ph-CH(CH_3)-CH_2-Ph-OCH_2-Ph^{F}-CF_3$

$H-Ph-CH(CH_3)-CH_2-Ph^{F}-OCH_2-Ph-CF_3$

$H-Ph-CH(CH_3)-CH_2-Ph-OCH_2-Ph^{FF}-CF_3$

$H-Ph-CH(CH_3)-CH_2-Ph^{FF}-OCH_2-Ph-CF_3$

$H-Ph-CH(CH_3)-CH_2-Ph^{F}-OCH_2-Ph^{F}-CF_3$

$H-Ph-CH(CH_3)-CH_2-Ph^{F}-OCH_2-Ph^{FF}-CF_3$

$H-Ph-CH(CH_3)-CH_2-Ph^{FF}-OCH_2-Ph^{F}-CF_3$

$H-Ph-CH(CH_3)-CH_2-Ph^{FF}-OCH_2-Ph^{FF}-CF_3$

$H-Ph-CH(CF_3)-CH_2-Ph-OCH_2-Ph^{FF}-CF_3$

$H-Ph-CHF-CH_2-Ph-OCH_2-Ph^{FF}-CF_3$

$H-Ph-CH(CH_3)-CO-Ph-OCH_2-Ph^{FF}-CF_3$

$H-Ph-CH(CF_3)-CO-Ph-OCH_2-Ph^{FF}-CF_3$

$H-Ph-CH(CH_3)-CH_2-Ph-CF=CF-Ph^{F}-CF_3$

$H-Ph-CH(CH_3)-CH_2-Ph^{F}-CF=CF-Ph-CF_3$

$H-Ph-CH(CH_3)-CH_2-Ph-CF=CF-Ph^{FF}-CF_3$

$H-Ph-CH(CH_3)-CH_2-Ph^{FF}-CF=CF-Ph-CF_3$

$H-Ph-CH(CH_3)-CH_2-Ph^{F}-CF=CF-Ph^{F}-CF_3$

$H-Ph-CH(CH_3)-CH_2-Ph^{F}-CF=CF-Ph^{FF}-CF_3$

$H-Ph-CH(CH_3)-CH_2-Ph^{FF}-CF=CF-Ph^{F}-CF_3$

$H-Ph-CH(CH_3)-CH_2-Ph^{FF}-CF=CF-Ph^{FF}-CF_3$

$H-Ph-CH(CF_3)-CH_2-Ph-CF=CF-Ph^{FF}-CF_3$

$H-Ph-CHF-CH_2-Ph-CF=CF-Ph^{FF}-CF_3$

$H-Ph-CH(CH_3)-CO-Ph-CF=CF-Ph^{FF}-CF_3$

$H-Ph-CH(CF_3)-CO-Ph-CF=CF-Ph^{FF}-CF_3$

$H-Ph-CH(CH_3)-CH_2-Ph-CF_2O-Ph^F-CF_3$

$H-Ph-CH(CH_3)-CH_2-Ph^F-CF_2O-Ph-CF_3$

$H-Ph-CH(CH_3)-CH_2-Ph-CF_2O-Ph^{FF}-CF_3$

$H-Ph-CH(CH_3)-CH_2-Ph^{FF}-CF_2O-Ph-CF_3$

$H-Ph-CH(CH_3)-CH_2-Ph^F-CF_2O-Ph^F-CF_3$

$H-Ph-CH(CH_3)-CH_2-Ph^F-CF_2O-Ph^{FF}-CF_3$

$H-Ph-CH(CH_3)-CH_2-Ph^{FF}-CF_2O-Ph^F-CF_3$

$H-Ph-CH(CH_3)-CH_2-Ph^{FF}-CF_2O-Ph^{FF}-CF_3$

$H-Ph-CH(CF_3)-CH_2-Ph-CF_2O-Ph^{FF}-CF_3$

$H-Ph-CHF-CH_2-Ph-CF_2O-Ph^{FF}-CF_3$

$H-Ph-CH(CH_3)-CO-Ph-CF_2O-Ph^{FF}-CF_3$

$H-Ph-CH(CF_3)-CO-Ph-CF_2O-Ph^{FF}-CF_3$

As preferred specific examples of the compound wherein $Z^7$=$OCF_3$, the following compounds may be mentioned.

$H-Ph-CH(CH_3)-CH_2-Ph-Ph^F-OCF_3$

$H-Ph-CH(CH_3)-CH_2-Ph^F-Ph-OCF_3$

$H-Ph-CH(CH_3)-CH_2-Ph-Ph^{FF}-OCF_3$

$H-Ph-CH(CH_3)-CH_2-Ph^{FF}-Ph-OCF_3$

$H-Ph-CH(CH_3)-CH_2-Ph^F-Ph^F-OCF_3$

$H-Ph-CH(CH_3)-CH_2-Ph^F-Ph^{FF}-OCF_3$

$H-Ph-CH(CH_3)-CH_2-Ph^{FF}-Ph^F-OCF_3$

$H-Ph-CH(CH_3)-CH_2-Ph^{FF}-Ph^{FF}-OCF_3$

$H-Ph-CH(CF_3)-CH_2-Ph-Ph^{FF}-OCF_3$

$H-Ph-CHF-CH_2-Ph-Ph^{FF}-OCF_3$

$H-Ph-CH(CH_3)-CO-Ph-Ph^{FF}-OCF_3$

$H-Ph-CH(CF_3)-CO-Ph-Ph^{FF}-OCF_3$

$H-Ph-CH(CH_3)-CH_2-Ph-COO-Ph^F-OCF_3$

$H-Ph-CH(CH_3)-CH_2-Ph^F-COO-Ph-OCF_3$

$H-Ph-CH(CH_3)-CH_2-Ph-COO-Ph^{FF}-OCF_3$

$H-Ph-CH(CH_3)-CH_2-Ph^{FF}-COO-Ph-OCF_3$

$H\text{-}Ph\text{-}CH(CH_3)\text{-}CH_2\text{-}Ph^{F}\text{-}COO\text{-}Ph^{F}\text{-}OCF_3$

$H\text{-}Ph\text{-}CH(CH_3)\text{-}CH_2\text{-}Ph^{F}\text{-}COO\text{-}Ph^{FF}\text{-}OCF_3$

$H\text{-}Ph\text{-}CH(CH_3)\text{-}CH_2\text{-}Ph^{FF}\text{-}COO\text{-}Ph^{F}\text{-}OCF_3$

$H\text{-}Ph\text{-}CH(CH_3)\text{-}CH_2\text{-}Ph^{FF}\text{-}COO\text{-}Ph^{FF}\text{-}OCF_3$

$H\text{-}Ph\text{-}CH(CF_3)\text{-}CH_2\text{-}Ph\text{-}COO\text{-}Ph^{FF}\text{-}OCF_3$

$H\text{-}Ph\text{-}CHF\text{-}CH_2\text{-}Ph\text{-}COO\text{-}Ph^{FF}\text{-}OCF_3$

$H\text{-}Ph\text{-}CH(CH_3)\text{-}CO\text{-}Ph\text{-}COO\text{-}Ph^{FF}\text{-}OCF_3$

$H\text{-}Ph\text{-}CH(CF_3)\text{-}CO\text{-}Ph\text{-}COO\text{-} Ph^{FF}\text{-}OCF_3$

$H\text{-}Ph\text{-}CH(CH_3)\text{-}CH_2\text{-}Ph\text{-}OCO\text{-}Ph^{F}\text{-}OCF_3$

$H\text{-}Ph\text{-}CH(CH_3)\text{-}CH_2\text{-}Ph^{F}\text{-}OCO\text{-}Ph\text{-}OCF_3$

$H\text{-}Ph\text{-}CH(CH_3)\text{-}CH_2\text{-}PH\text{-}OCO\text{-}Ph^{FF}\text{-}OCF_3$

$H\text{-}Ph\text{-}CH(CH_3)\text{-}CH_2\text{-}Ph^{FF}\text{-}OCO\text{-}Ph\text{-}OCF_3$

$H\text{-}Ph\text{-}CH(CH_3)\text{-}CH_2\text{-}Ph^{F}\text{-}OCO\text{-}Ph^{F}\text{-}OCF_3$

$H\text{-}Ph\text{-}CH(CH_3)\text{-}CH_2\text{-}Ph^{F}\text{-}OCO\text{-}Ph^{FF}\text{-}OCF_3$

$H\text{-}Ph\text{-}CH(CH_3)\text{-}CH_2\text{-}Ph^{FF}\text{-}OCO\text{-}Ph^{F}\text{-}OCF_3$

$H\text{-}Ph\text{-}CH(CH_3)\text{-}CH_2\text{-}Ph^{FF}\text{-}OCO\text{-}Ph^{FF}\text{-}OCF_3$

$H\text{-}Ph\text{-}CH(CF_3)\text{-}CH_2\text{-}Ph\text{-}OCO\text{-}Ph^{FF}\text{-}OCF_3$

$H\text{-}Ph\text{-}CHF\text{-}CH_2\text{-}Ph\text{-}OCO\text{-}Ph^{FF}\text{-}OCF_3$

$H\text{-}Ph\text{-}CH(CH_3)\text{-}CO\text{-}Ph\text{-}OCO\text{-}Ph^{FF}\text{-}OCF_3$

$H\text{-}Ph\text{-}CH(CF_3)\text{-}CO\text{-}Ph\text{-}OCO\text{-}Ph^{FF}\text{-}OCF_3$

$H\text{-}Ph\text{-}CH(CH_3)\text{-}CH_2\text{-}Ph\text{-}CH_2CH_2\text{-}Ph^{F}\text{-}OCF_3$

$H\text{-}Ph\text{-}CH(CH_3)\text{-}CH_2\text{-}Ph^{F}\text{-}CH_2CH_2\text{-}Ph\text{-}OCF_3$

$H\text{-}Ph\text{-}CH(CH_3)\text{-}CH_2\text{-}Ph\text{-}CH_2CH_2\text{-}Ph^{FF}\text{-}OCF_3$

$H\text{-}Ph\text{-}CH(CH_3)\text{-}CH_2\text{-}Ph^{FF}\text{-}CH_2CH_2\text{-}Ph\text{-}OCF_3$

$H\text{-}Ph\text{-}CH(CH_3)\text{-}CH_2\text{-}Ph^{F}\text{-}CH_2CH_2\text{-}PhF\text{-}OCF_3$

$H\text{-}Ph\text{-}CH(CH_3)\text{-}CH_2\text{-}Ph^{F}\text{-}CH_2CH_2\text{-}Ph^{FF}\text{-}OCF_3$

$H\text{-}Ph\text{-}CH(CH_3)\ \text{-}CH_2\text{-}Ph^{FF}\text{-}CH_2CH_2\text{-}Ph^{F}\text{-}OCF_3$

$H\text{-}Ph\text{-}CH(CH_3)\text{-}CH_2\text{-}Ph^{FF}\text{-}CH_2CH_2\text{-}Ph^{FF}\text{-}OCF_3$

$H\text{-}Ph\text{-}CH(CF_3)\text{-}CH_2\text{-}Ph\text{-}CH_2CH_2\text{-}Ph^{FF}\text{-}OCF_3$

$H-Ph-CHF-CH_2-Ph-CH_2CH_2-Ph^{FF}-OCF_3$

$H-Ph-CH(CH_3)-CO-Ph-CH_2CH_2-Ph^{FF}-OCF_3$

$H-Ph-CH(CF_3)-CO-Ph-CH_2CH_2-Ph^{FF}-OCF_3$

$H-Ph-CH(CH_3)-CH_2-Ph-CH_2O-Ph^{F}-OCF_3$

$H-Ph-CH(CH_3)-CH_2-Ph^{F}-CH_2O-Ph-OCF_3$

$H-Ph-CH(CH_3)-CH_2-Ph-CH_2O-Ph^{FF}-OCF_3$

$H-Ph-CH(CH_3)-CH_2-Ph^{FF}-CH_2O-Ph-OCF_3$

$H-Ph-CH(CH_3)-CH_2-Ph^{F}-CH_2O-Ph^{F}-OCF_3$

$H-Ph-CH-(CH_3)-CH_2-Ph^{F}-CH_2O-Ph^{FF}-OCF_3$

$H-Ph-CH(CH_3)-CH_2-Ph^{FF}-CH_2O-Ph^{F}-OCF_3$

$H-Ph-CH(CH_3)-CH_2-Ph^{FF}-CH_2O-Ph^{FF}-OCF_3$

$H-Ph-CH(CF_3)-CH_2-Ph-CH_2O-Ph^{FF}-OCF_3$

$H-Ph-CHF-CH_2-Ph-CH_2O-Ph^{FF}-OCF_3$

$H-Ph-CH(CH_3)-CO-Ph-CH_2O-Ph^{FF}-OCF_3$

$H-Ph-CH(CF_3)-CO-Ph-CH_2O-Ph^{FF}-OCF_3$

$H-Ph-CH(CH_3)-CH_2-Ph-OCH_2-Ph^{F}-OCF_3$

$H-Ph-CH(CH_3)-CH_2-Ph^{F}-OCH_2-Ph-OCF_3$

$H-Ph-CH(CH_3)-CH_2-Ph-OCH_2-Ph^{FF}-OCF_3$

$H-Ph-CH(CH_3)-CH_2-Ph^{FF}-OCH_2-Ph-OCF_3$

$H-Ph-CH(CH_3)-CH_2-Ph^{F}-OCH_2-Ph^{F}-OCF_3$

$H-Ph-CH(CH_3)-CH_2-Ph^{F}-OCH_2-Ph^{FF}-OCF_3$

$H-Ph-CH(CH_3)-CH_2-Ph^{FF}-OCH_2-Ph^{F}-OCF_3$

$H-Ph-CH(CH_3)-CH_2-Ph^{FF}-OCH_2-Ph^{FF}-OCF_3$

$H-Ph-CH(CF_3)-CH_2-Ph-OCH_2-Ph^{FF}-OCF_3$

$H-Ph-CHF-CH_2-Ph-OCH_2-Ph^{FF}-OCF_3$

$H-Ph-CH(CH_3)-CO-Ph-OCH_2-Ph^{FF}-OCF_3$

$H-Ph-CH(CF_3)-CO-Ph-OCH_2-Ph^{FF}-OCF_3$

$H-Ph-CH(CH_3)-CH_2-Ph-CF=CF-Ph^{FF}-OCF_3$

$H-Ph-CH(CH_3)-CH_2-Ph^{F}-CF=CF-Ph-OCF_3$

$H-Ph-CH(CH_3)-CH_2-Ph-CF=CF-Ph^{FF}-OCF_3$

$H-Ph-CH(CH_3)-CH_2-Ph^{FF}-CF=CF-Ph-OCF_3$

$H-Ph-CH(CH_3)-CH_2-Ph^{F}-CF=CF-Ph^{F}-OCF_3$

$H-Ph-CH(CH_3)-CH_2-Ph^{F}-CF=CF-Ph^{FF}-OCF_3$

$H-Ph-CH(CH_3)-CH_2-Ph^{FF}-CF=CF-Ph^{F}-OCF_3$

$H-Ph-CH(CH_3)-CH_2-Ph^{FF}-CF=CF-Ph^{FF}-OCF_3$

$H-Ph-CH(CF_3)-CH_2-Ph-CF=CF-Ph^{FF}-OCF_3$

$H-Ph-CHF-CH_2-Ph-CF=CF-Ph^{FF}-OCF_3$

$H-Ph-CH(CH_3)-CO-Ph-CF=CF-Ph^{FF}-OCF_3$

$H-Ph-CH(CF_3)-CO-Ph-CF=CF-Ph^{FF}-OCF_3$

$H-Ph-CH(CH_3)-CH_2-Ph-CF_2O-Ph^{F}-OCF_3$

$H-Ph-CH(CH_3)-CH_2-Ph^{F}-CF_2O-Ph-OCF_3$

$H-Ph-CH(CH_3)-CH_2-Ph-CF_2O-Ph^{FF}-OCF:$

$H-Ph-CH(CH_3)-CH_2-Ph^{FF}-CF_2O-Ph-OCF_3$

$H-Ph-CH(CH_3)-CH_2-Ph^{F}-CF_2O-Ph^{F}-OCF_3$

$H-Ph-CH(CH_3)-CH_2-Ph^{F}-CF_2O-Ph^{FF}-OCF_3$

$H-Ph-CH(CH_3)-CH_2-Ph^{FF}-CF_2O-Ph^{F}-OCF_3$

$H-Ph-CH(CH_3)-CH_2-Ph^{FF}-CF_2O-Ph^{FF}-OCF_3$

$H-Ph-CH(CF_3)-CH_2-Ph-CF_2O-Ph^{FF}-OCF_3$

$H-Ph-CHF-CH_2-Ph-CF_2O-Ph^{FF}-OCF_3$

$H-Ph-CH(CH_3)-CO-Ph-CF_2O-Ph^{FF}-OCF_3$

$H-Ph-CH(CF_3)-CO-Ph-CF_2O-Ph^{FF}-OCF_3$

As preferred specific examples of the compound wherein $Z^7=SF_5$, the following compounds may be mentioned.

$H-Ph-CH(CH_3)-CH_2-Ph-Ph^{F}-SF_5$

$H-Ph-CH(CH_3)-CH_2-Ph^{F}-Ph-SF_5$

$H-Ph-CH(CH_3)-CH_2-Ph-Ph^{FF}-SF_5$

$H-Ph-CH(CH_3)-CH_2-Ph^{FF}-Ph-SF_5$

$H-Ph-CH(CH_3)-CH_2-Ph^{F}-Ph^{F}-SF_5$

$H-Ph-CH(CH_3)-CH_2-Ph^{F}-Ph^{FF}-SF_5$

$H\text{-}Ph\text{-}CH(CH_3)\text{-}CH_2\text{-}Ph^{FF}\text{-}Ph^{F}\text{-}SF_5$

$H\text{-}Ph\text{-}CH(CH_3)\text{-}CH_2\text{-}Ph^{FF}\text{-}Ph^{FF}\text{-}SF_5$

$H\text{-}Ph\text{-}CH(CF_3)\text{-}CH_2\text{-}Ph\text{-}Ph^{FF}\text{-}SF_5$

$H\text{-}Ph\text{-}CHF\text{-}CH_2\text{-}Ph\text{-}Ph^{FF}\text{-}SF_5$

$H\text{-}Ph\text{-}CH(CH_3)\text{-}CO\text{-}Ph\text{-}Ph^{FF}\text{-}SF_5$

$H\text{-}Ph\text{-}CH(CF_3)\text{-}CO\text{-}Ph\text{-}Ph^{FF}\text{-}SF_5$

$H\text{-}Ph\text{-}CH(CH_3)\text{-}CH_2\text{-}Ph\text{-}COO\text{-}Ph^{F}\text{-}SF_5$

$H\text{-}Ph\text{-}CH(CH_3)\text{-}CH_2\text{-}Ph^{F}\text{-}COO\text{-}Ph\text{-}SF_5$

$H\text{-}Ph\text{-}CH(CH_3)\text{-}CH_2\text{-}Ph\text{-}COO\text{-}Ph^{FF}\text{-}SF_5$

$H\text{-}Ph\text{-}CH(CH_3)\text{-}CH_2\text{-}Ph^{FF}\text{-}COO\text{-}Ph\text{-}SF_5$

$H\text{-}Ph\text{-}CH(CH_3)\text{-}CH_2\text{-}Ph^{F}\text{-}COO\text{-}Ph^{F}\text{-}SF_5$

$H\text{-}Ph\text{-}CH(CH_3)\text{-}CH_2\text{-}Ph^{F}\text{-}COO\text{-}Ph^{FF}\text{-}SF_5$

$H\text{-}Ph\text{-}CH(CH_3)\text{-}CH_2\text{-}Ph^{FF}\text{-}COO\text{-}Ph^{F}\text{-}SF_5$

$H\text{-}Ph\text{-}CH(CH_3)\text{-}CH_2\text{-}Ph^{FF}\text{-}COO\text{-}Ph^{FF}\text{-}SF_5$

$H\text{-}Ph\text{-}CH(CF_3)\text{-}CH_2\text{-}Ph\text{-}COO\text{-}Ph^{FF}\text{-}SF_5$

$H\text{-}Ph\text{-}CHF\text{-}CH_2\text{-}Ph\text{-}COO\text{-}Ph^{FF}\text{-}SF_5$

$H\text{-}Ph\text{-}CH(CH_3)\text{-}CO\text{-}Ph\text{-}COO\text{-}Ph^{FF}\text{-}SF_5$

$H\text{-}Ph\text{-}CH(CF_3)\text{-}CO\text{-}Ph\text{-}COO\text{-}Ph^{FF}\text{-}SF_5$

$H\text{-}Ph\text{-}CH(CH_3)\text{-}CH_2\text{-}Ph\text{-}OCO\text{-}Ph^{F}\text{-}SF_5$

$H\text{-}Ph\text{-}CH(CH_3)\text{-}CH_2\text{-}Ph^{F}\text{-}OCO\text{-}Ph\text{-}SF_5$

$H\text{-}Ph\text{-}CH(CH_3)\text{-}CH_2\text{-}Ph\text{-}OCO\text{-}Ph^{FF}\text{-}SF_5$

$H\text{-}Ph\text{-}CH(CH_3)\text{-}CH_2\text{-}Ph^{FF}\text{-}OCO\text{-}Ph\text{-}SF_5$

$H\text{-}Ph\text{-}CH(CH_3)\text{-}CH_2\text{-}Ph^{F}\text{-}OCO\text{-}Ph^{F}\text{-}SF_5$

$H\text{-}Ph\text{-}CH(CH_3)\text{-}CH_2\text{-}Ph^{F}\text{-}OCO\text{-}Ph^{FF}\text{-}SF_5$

$H\text{-}Ph\text{-}CH(CH_3)\text{-}CH_2\text{-}Ph^{FF}\text{-}OCO\text{-}Ph^{F}\text{-}SF_5$

$H\text{-}Ph\text{-}CH(CH_3)\text{-}CH_2\text{-}Ph^{FF}\text{-}OCO\text{-}Ph^{FF}\text{-}SF_5$

$H\text{-}Ph\text{-}CH(CF_3)\text{-}CH_2\text{-}Ph\text{-}OCO\text{-}Ph^{FF}\text{-}SF_5$

$H\text{-}Ph\text{-}CHF\text{-}CH_2\text{-}Ph\text{-}OCO\text{-}Ph^{FF}\text{-}SF_5$

$H\text{-}Ph\text{-}CH(CH_3)\text{-}CO\text{-}Ph\text{-}OCO\text{-}Ph^{FF}\text{-}SF_5$

$H-Ph-CH(CF_3)-CO-PH-OCO-Ph^{FF}-SF_5$

$H-Ph-CH(CH_3)-CH_2-Ph-CH_2CH_2-Ph^{F}-SF_5$

$H-Ph-CH(CH_3)-CH_2-Ph^{F}-CH_2CH_2-Ph-SF_5$

$H-Ph-CH(CH_3)-CH_2-Ph-CH_2CH_2-Ph^{FF}-SF_5$

$H-Ph-CH(CH_3)-CH_2-Ph^{FF}-CH_2CH_2-Ph-SF_5$

$H-Ph-CH(CH_3)-CH_2-Ph^{F}-CH_2CH_2-Ph^{FF}-SF_5$

$H-Ph-CH(CH_3)-CH_2-Ph^{F}-CH_2CH_2-Ph^{FF}-SF_5$

$H-Ph-CH(CH_3)-CH_2-Ph^{FF}-CH_2CH_2-Ph^{F}-SF_5$

$H-Ph-CH(CH_3)-CH_2-Ph^{FF}-CH_2CH_2-Ph^{FF}-SF_5$

$H-Ph-CH(CF_3)-CH_2-Ph-CH_2CH_2-Ph^{FF}-SF_5$

$H-Ph-CHF-CH_2-Ph-CH_2CH_2-Ph^{FF}-SF_5$

$H-Ph-CH(CH_3)-CO-Ph-CH_2CH_2-Ph^{FF}-SF_5$

$H-Ph-CH(CF_3)-CO-Ph-CH_2CH_2-Ph^{FF}-SF_5$

$H-Ph-CH(CH_3)-CH_2-Ph-CH_2O-Ph^{F}-SF_5$

$H-Ph-CH(CH_3)-CH_2-Ph^{F}-CH_2O-Ph-SF_5$

$H-Ph-CH(CH_3)-CH_2-Ph-CH_2O-Ph^{FF}-SF_5$

$H-Ph-CH(CH_3)-CH_2-Ph^{FF}-CH_2O-Ph-SF_5$

$H-Ph-CH(CH_3)-CH_2-Ph^{F}-CH_2O-Ph^{F}-SF_5$

$H-Ph-CH(CH_3)-CH_2-Ph^{F}-CH_2O-Ph^{FF}-SF_5$

$H-Ph-CH(CH_3)-CH_2-Ph^{FF}-CH_2O-Ph^{F}-SF_5$

$H-Ph-CH(CH_3)-CH_2-Ph^{FF}-CH_2O-Ph^{FF}-SF_5$

$H-Ph-CH(CF_3)-CH_2-Ph-CH_2O-Ph^{FF}-SF_5$

$H-Ph-CHF-CH_2-Ph-CH_2O-Ph^{FF}-SF_5$

$H-Ph-CH(CH_3)-CO-Ph-CH_2O-Ph^{FF}-SF_5$

$H-Ph-CH(CF_3)-CO-Ph-CH_2O-Ph^{FF}-SF_5$

$H-Ph-CH(CH_3)-CH_2-Ph-OCH_2-Ph^{F}-SF_5$

$H-Ph-CH(CH_3)-CH_2-Ph^{F}-OCH_2-Ph-SF_5$

$H-Ph-CH(CH_3)-CH_2-Ph-OCH_2-Ph^{FF}-SF_5$

$H-Ph-CH(CH_3)-CH_2-Ph^{FF}-OCH_2-Ph-SF_5$

$H-Ph-CH(CH_3)-CH_2-Ph^F-OCH_2-Ph^F-SF_5$

$H-Ph-CH(CH_3)-CH_2-Ph^F-OCH_2-Ph^{FF}-SF_5$

$H-Ph-CH(CH_3)-CH_2-Ph^{FF}-OCH_2-Ph^F-SF_5$

$H-Ph-CH(CH_3)-CH_2-Ph^{FF}-OCH_2-Ph^{FF}-SF_5$

$H-Ph-CH(CF_3)-CH_2-Ph-OCH_2-Ph^{FF}-SF_5$

$H-Ph-CHF-CH_2-Ph-OCH_2-Ph^{FF}-SF_5$

$H-Ph-CH(CH_3)-CO-Ph-OCH_2-Ph^{FF}-SF_5$

$H-Ph-CH(CF_3)-CO-Ph-OCH_2-Ph^{FF}-SF_5$

$H-Ph-CH(CH_3)-CH_2-Ph-CF=CF-Ph^F-SF_5$

$H-Ph-CH(CH_3)-CH_2-Ph^F-CF=CF-Ph-SF_5$

$H-Ph-CH(CH_3)-CH_2-Ph-CF=CF-Ph^{FF}-SF_5$

$H-Ph-CH(CH_3)-CH_2-Ph^{FF}-CF=CF-Ph-SF_5$

$H-Ph-CH(CH_3)-CH_2-Ph^F-CF=CF-Ph^F-SF_5$

$H-Ph-CH(CH_3)-CH_2-Ph^F-CF=CF-Ph^{FF}-SF_5$

$H-Ph-CH(CH_3)-CH_2-Ph^{FF}-CF=CF-Ph^F-SF_5$

$H-Ph-CH(CH_3)-CH_2-Ph^{FF}-CF=CF-Ph^{FF}-SF_5$

$H-Ph-CH(CF_3)-CH_2-Ph-CF=CF-Ph^{FF}-SF_5$

$H-Ph-CHF-CH_2-Ph-CF=CF-Ph^{FF}-SF_5$

$H-Ph-CH(CH_3)-CO-Ph-CF=CF-Ph^{FF}-SF_5$

$H-Ph-CH(CF_3)-CO-Ph-CF=CF-Ph^{FF}-SF_5$

$H-Ph-CH(CH_3)-CH_2-Ph-CF_2O-Ph^F-SF_5$

$H-Ph-CH (CH_3)-CH_2-Ph^F-CF_2O-Ph-SF_5$

$H-PH-CH(CH_3)-CH_2-Ph-CF_2O-Ph^{FF}-SF_5$

$H-Ph-CH(CH_3)-CH_2-Ph^{FF}-CF_2O-Ph-SF_5$

$H-Ph-CH(CH_3)-CH_2-Ph^F-CF_2O-Ph^F-SF_5$

$H-Ph-CH(CH_3)-CH_2-Ph^F-CF_2O-Ph^{FF}-SF_5$

$H-Ph-CH(CH_3)-CH_2-Ph^{FF}-CF_2O-Ph^F-SF_5$

$H-Ph-CH(CH_3)-CH_2-Ph^{FF}-CF_2O-Ph^{FF}-SF_5$

$H-Ph-CH(CF_3)-CH_2-Ph-CF_2O-Ph^{FF}-SF_5$

H-Ph-CHF-$CH_2$-Ph-$CF_2$O-$Ph^{FF}$-$SF_5$

H-Ph-CH($CH_3$)-CO-Ph-$CF_2$O-$Ph^{FF}$-$SF_5$

H-Ph-CH($CF_3$)-CO-Ph-$CF_2$O-$Ph^{FF}$-$SF_5$

As preferred specific examples of the compound wherein $Z^7$=F, the following compounds may be mentioned.

H-Ph-CH($CH_3$)-$CH_2$-Ph-$Ph^F$-F

H-Ph-CH($CH_3$)-$CH_2$-$Ph^F$-Ph-F

H-Ph-CH($CH_3$)-$CH_2$-Ph-$Ph^{FF}$-F

H-Ph-CH($CH_3$)-$CH_2$-$Ph^{FF}$-Ph-F

H-Ph-CH($CH_3$)-$CH_2$-$Ph^F$-$Ph^F$-F

H-Ph-CH($CH_3$)-$CH_2$-$Ph^F$-$Ph^{FF}$-F

H-Ph-CH($CH_3$)-$CH_2$-$Ph^{FF}$-$Ph^F$-F

H-Ph-CH($CH_3$)-$CH_2$-$Ph^{FF}$-$Ph^{FF}$-F

H-Ph-CH($CF_3$)-$CH_2$-Ph-$Ph^{FF}$-F

H-Ph-CHF-$CH_2$-Ph-$Ph^{FF}$-F

H-Ph-CH($CH_3$)-CO-Ph-$Ph^{FF}$-F

H-Ph-CH($CF_3$)-CO-Ph-$Ph^{FF}$-F

H-Ph-CH($CH_3$)-$CH_2$-Ph-COO-$Ph^F$-F

H-Ph-CH($CH_3$)-$CH_2$-$Ph^F$-COO-Ph-F

H-Ph-CH($CH_3$)-$CH_2$-Ph-COO-$Ph^{FF}$-F

H-Ph-CH($CH_3$)-$CH_2$-$Ph^{FF}$-COO-Ph-F

H-Ph-CH($CH_3$)-$CH_2$-$Ph^F$-COO-$Ph^F$-F

H-Ph-CH($CH_3$)-$CH_2$-$Ph^F$-COO-$Ph^{FF}$-F

H-Ph-CH($CH_3$)-$CH_2$-$Ph^{FF}$-COO-$Ph^F$-F

H-Ph-CH($CH_3$)-$CH_2$-$Ph^{FF}$-COO-$Ph^{FF}$-F

H-Ph-CH($CF_3$)-$CH_2$-Ph-COO-$Ph^{FF}$-F

H- Ph-CHF-$CH_2$-Ph-COO-$Ph^{FF}$-F

H-Ph-CH($CH_3$)-CO-Ph-COO-$Ph^{FF}$-F

H-Ph-CH($CF_3$)-CO-Ph-COO-$Ph^{FF}$-F

H-Ph-CH($CH_3$)-$CH_2$-Ph-OCO-$Ph^F$-F

$H\text{-}Ph\text{-}CH(CH_3)\text{-}CH_2\text{-}Ph^F\text{-}OCO\text{-}Ph\text{-}F$

$H\text{-}Ph\text{-}CH(CH_3)\text{-}CH_2\text{-}Ph\text{-}OCO\text{-}Ph^{FF}\text{-}F$

$H\text{-}Ph\text{-}CH(CH_3)\text{-}CH_2\text{-}Ph^{FF}\text{-}OCO\text{-}Ph\text{-}F$

$H\text{-}Ph\text{-}CH(CH_3)\text{-}CH_2\text{-}Ph^F\text{-}OCO\text{-}Ph^F\text{-}F$

$H\text{-}Ph\text{-}CH(CH_3)\text{-}CH_2\text{-}Ph^F\text{-}OCO\text{-}Ph^{FF}\text{-}F$

$H\text{-}Ph\text{-}CH(CH_3)\text{-}CH_2\text{-}Ph^{FF}\text{-}OCO\text{-}Ph^F\text{-}F$

$H\text{-}Ph\text{-}CH(CH_3)\text{-}CH_2\text{-}Ph^{FF}\text{-}OCO\text{-}Ph^{FF}\text{-}F$

$H\text{-}Ph\text{-}CH(CF_3)\text{-}CH_2\text{-}Ph\text{-}OCO\text{-}Ph^{FF}\text{-}F$

$H\text{-}Ph\text{-}CHF\text{-}CH_2\text{-}Ph\text{-}OCO\text{-}Ph^{FF}\text{-}F$

$H\text{-}Ph\text{-}CH(CH_3)\text{-}CO\text{-}Ph\text{-}OCO\text{-}Ph^{FF}\text{-}F$

$H\text{-}Ph\text{-}CH(CF_3)\text{-}CO\text{-}Ph\text{-}OCO\text{-}Ph^{FF}\text{-}F$

$H\text{-}Ph\text{-}CH(CH_3)\text{-}CH_2\text{-}Ph\text{-}CH_2CH_2\text{-}Ph^F\text{-}F$

$H\text{-}Ph\text{-}CH(CH_3)\text{-}CH_2\text{-}Ph^F\text{-}CH_2CH_2\text{-}Ph\text{-}F$

$H\text{-}Ph\text{-}CH(CH_3)\text{-}CH_2\text{-}Ph\text{-}CH_2CH_2\text{-}Ph^{FF}\text{-}F$

$H\text{-}Ph\text{-}CH(CH_3)\text{-}CH_2\text{-}Ph^{FF}\text{-}CH_2CH_2\text{-}Ph\text{-}F$

$H\text{-}Ph\text{-}CH(CH_3)\text{-}CH_2\text{-}Ph^F\text{-}CH_2CH_2\text{-}Ph^F\text{-}F$

$H\text{-}Ph\text{-}CH(CH_3)\text{-}CH_2\text{-}Ph^F\text{-}CH_2CH_2\text{-}Ph^{FF}\text{-}F_3$

$H\text{-}Ph\text{-}CH(CH_3)\text{-}CH_2\text{-}Ph^{FF}\text{-}CH_2CH_2\text{-}Ph^F\text{-}F$

$H\text{-}Ph\text{-}CH(CH_3)\text{-}CH_2\text{-}Ph^{FF}\text{-}CH_2CH_2\text{-}Ph^{FF}\text{-}F$

$H\text{-}Ph\text{-}CH(CF_3)\text{-}CH_2\text{-}Ph\text{-}CH_2CH_2\text{-}Ph^{FF}\text{-}F$

$H\text{-}Ph\text{-}CHF\text{-}CH_2\text{-}Ph\text{-}CH_2CH_2\text{-}Ph^{FF}\text{-}F$

$H\text{-}Ph\text{-}CH(CH_3)\text{-}CO\text{-}Ph\text{-}CH_2CH_2\text{-}Ph^{FF}\text{-}F$

$H\text{-}Ph\text{-}CH(CF_3)\text{-}CO\text{-}Ph\text{-}CH_2CH_2\text{-}Ph^{FF}\text{-}F$

$H\text{-}Ph\text{-}CH(CH_3)\text{-}CH_2\text{-}Ph\text{-}CH_2O\text{-}Ph^F\text{-}F$

$H\text{-}Ph\text{-}CH(CH_3)\text{-}CH_2\text{-}Ph^F\text{-}CH_2O\text{-}Ph\text{-}F$

$H\text{-}Ph\text{-}CH(CH_3)\text{-}CH_2\text{-}Ph\text{-}CH_2O\text{-}Ph^{FF}\text{-}F$

$H\text{-}Ph\text{-}CH(CH_3)\text{-}CH_2\text{-}Ph^{FF}\text{-}CH_2O\text{-}Ph\text{-}F$

$H\text{-}Ph\text{-}CH(CH_3)\text{-}CH_2\text{-}Ph^F\text{-}CH_2O\text{-}Ph^F\text{-}F$

$H\text{-}Ph\text{-}CH(CH_3)\text{-}CH_2\text{-}Ph^F\text{-}CH_2O\text{-}Ph^{FF}\text{-}F$

H-Ph-CH($CH_3$)-$CH_2$-$Ph^{FF}$-$CH_2$O-$Ph^{F}$-F

H-Ph-CH($CH_3$)-$CH_2$-$Ph^{FF}$-$CH_2$O-$Ph^{FF}$-F

H-Ph-CH($CF_3$)-$CH_2$-Ph-$CH_2$O-$Ph^{FF}$-F

H-Ph-CHF-$CH_2$-Ph-$CH_2$O-$Ph^{FF}$-F

H-Ph-CH($CH_3$)-CO-Ph-$CH_2$O-$Ph^{FF}$-F

H-Ph-CH($CF_3$)-CO-Ph-$CH_2$O-$Ph^{FF}$-F

H-Ph-CH($CH_3$)-$CH_2$-Ph-O$CH_2$-$Ph^{F}$-F

H-Ph-CH($CH_3$)-$CH_2$-$Ph^{F}$-O$CH_2$-Ph-F

H-Ph-CH($CH_3$)-$CH_2$-Ph-O$CH_2$-$Ph^{FF}$-F

H-Ph-CH($CH_3$)-$CH_2$-$Ph^{FF}$-O$CH_2$-Ph-F

H-Ph-CH($CH_3$)-$CH_2$-$Ph^{F}$-O$CH_2$-$Ph^{F}$-F

H-Ph-CH($CH_3$)-$CH_2$-$Ph^{F}$-O$CH_2$-$Ph^{FF}$-F

H-Ph-CH($CH_3$)-$CH_2$-$Ph^{FF}$-O$CH_2$-$Ph^{F}$-F

H-Ph-CH($CH_3$)-$CH_2$-$Ph^{FF}$-O$CH_2$-$Ph^{FF}$-F

H-Ph-CH($CF_3$)-$CH_2$-Ph-O$CH_2$-$Ph^{FF}$-F

H-Ph-CHF-$CH_2$-Ph-O$CH_2$-$Ph^{FF}$-F

H-Ph-CH($CH_3$)-CO-Ph-O$CH_2$-$Ph^{FF}$-F

H-Ph-CH($CF_3$)-CO-Ph-O$CH_2$-$Ph^{FF}$-F

H-Ph-CH($CH_3$)-$CH_2$-Ph-CF=CF-$Ph^{F}$-F

H-Ph-CH($CH_3$)-$CH_2$-$Ph^{F}$-CF=CF-Ph-F

H-Ph-CH($CH_3$)-$CH_2$-Ph-CF=CF-$Ph^{FF}$-F

H-Ph-CH($CH_3$)-$CH_2$-$Ph^{FF}$-CF=CF-Ph-F

H-Ph-CH($CH_3$)-$CH_2$-$Ph^{F}$-CF=CF-$Ph^{F}$-F

H-Ph-CH($CH_3$)-$CH_2$-$Ph^{F}$-CF=CF-$Ph^{FF}$-F

H-Ph-CH($CH_3$)-$CH_2$-$Ph^{FF}$-CF=CF-$Ph^{F}$-F

H-Ph-CH($CH_3$)-$CH_2$-$Ph^{FF}$-CF=CF-$Ph^{FF}$-F

H-Ph-CH($CF_3$)-$CH_2$-Ph-CF=CF-$Ph^{FF}$-F

H-Ph-CHF-$CH_2$-Ph-CF=CF-$Ph^{FF}$-F

H-Ph-CH($CH_3$)-CO-Ph-CF=CF-$Ph^{FF}$-F

H-Ph-CH($CF_3$)-CO-Ph-CF=CF-$Ph^{FF}$-F

H-Ph-CH($CH_3$)-$CH_2$-Ph-$CF_2$O-$Ph^F$-F

H-Ph-CH($CH_3$)-$CH_2$-$Ph^F$-$CF_2$O-Ph-F

H-Ph-CH($CH_3$)-$CH_2$-Ph-$CF_2$O-$Ph^{FF}$-F

H-Ph-CH($CH_3$)-$CH_2$-$Ph^{FF}$-$CF_2$O-Ph-F

H-Ph-CH($CH_3$)-$CH_2$-$Ph^F$-$CF_2$O-$Ph^F$-F

H-Ph-CH($CH_3$)-$CH_2$-$Ph^F$-$CF_2$O-$Ph^{FF}$-F

H-Ph-CH(CH3)-$CH_2$-$Ph^{FF}$-$CF_2$O-$Ph^F$-F

H-Ph-CH($CH_3$)-$CH_2$-$Ph^{FF}$-$CF_2$O-$Ph^{FF}$-F

H-Ph-CH($CF_3$)-$CH_2$-Ph-$CF_2$O-$Ph^{FF}$-F

H-Ph-CHF-$CH_2$-Ph-$CF_2$O-$Ph^{FF}$-F

H-Ph-CH($CH_3$)-CO-Ph-$CF_2$O-$Ph^{FF}$-F

H-Ph-CH($CF_3$)-CO-Ph-$CF_2$O-$Ph^{FF}$-F

Specific examples of the compound wherein the number of ring groups is 4

As preferred specific examples of the compound wherein $Z^7$=CN, the following compounds may be mentioned.

H-Ph-CH($CH_3$)-$CH_2$-Ph-$Ph^{FF}$-$Ph^{FF}$-CN

H-Ph-CH($CH_3$)-$CH_2$-$Ph^F$-Ph-$Ph^{FF}$-CN

H-Ph-CH($CH_3$)-$CH_2$-Cy-$Ph^{FF}$-$Ph^F$-CN

H-Ph-CH($CH_3$)-$CH_2$-$Ph^{FF}$-Cy-$Ph^{FF}$-CN

H-Ph-CH($CH_3$)-$CH_2$-Cy-Cy-$Ph^{FF}$-CN

H-Ph-CH($CF_3$)-$CH_2$-$Ph^{FF}$-Ph-$Ph^{FF}$-CN

H-Ph-CHF-$CH_2$-$Ph^{FF}$-Ph-$Ph^{FF}$-CN

H-Ph-CH($CH_3$)-CO-$CH_2$-$Ph^{FF}$-Ph-$Ph^{FF}$-CN

H-Ph-CH($CH_3$)-$CH_2$-Ph-$Ph^{FF}$-COO-$Ph^{FF}$-CN

H-Ph-CH($CH_3$)-$CH_2$-Cy-COO-$Ph^{FF}$-$Ph^F$-CN

H-Ph-CH($CH_3$)-$CH_2$-$Ph^{FF}$-COO-Cy-$Ph^{FF}$-CN

H-Ph-CH($CH_3$)-$CH_2$-Cy-Cy-COO-$Ph^{FF}$-CN

H-Ph-CH($CH_3$)-$CH_2$-Cy-COO-Cy-$Ph^{FF}$-CN

$H-Ph-CH(CH_3)-CH_2-Ph-Ph^{FF}-OCO-Ph^{FF}-CN$

$H-Ph-CH(CH_3)-CH_2-Cy-OCO-Ph^{FF}-Ph^{F}-CN$

$H-Ph-CH(CH_3)-CH_2-Ph^{FF}-OCO-Cy-Ph^{FF}-CN$

$H-Ph-CH(CH_3)-CH_2-Cy-Cy-OCO-Ph^{FF}-CN$

$H-Ph-CH(CH_3)-CH_2-Cy-OCO-Cy-Ph^{FF}-CN$

$H-Ph-CH(CH_3)-CH_2-Ph-Ph^{FF}-CH_2CH_2-Ph^{FF}-CN$

$H-Ph-CH(CH_3)-CH_2-Cy-CH_2CH_2-Ph^{FF}-Ph^{F}-CN$

$H-Ph-CH(CH_3)-CH_2-Ph^{FF}-CH_2CH_2-Cy-Ph^{FF}-CN$

$H-Ph-CH(CH_3)-CH_2-Cy-Cy-CH_2CH_2-Ph^{FF}-CN$

$H-Ph-CH(CH_3)-CH_2-Cy-CH_2CH_2-Cy-Ph^{FF}-CN$

$H-Ph-CH(CH_3)-CH_2-Ph-CH_2CH_2-Ph^{FF}-COO-Ph^{FF}-CN$

$H-Ph-CH(CH_3)-CH_2-Cy-CH_2CH_2-Ph^{FF}-COO-Ph^{F}-CN$

$H-Ph-CH(CH_3)-CH_2-Ph^{FF}-CH_2CH_2-Cy-COO-Ph^{FF}-CN$

$H-Ph-CH(CH_3)-CH_2-Cy-CH_2CH_2-Cy-COO-Ph^{FF}-CN$

$H-Ph-CH(CH_3)-CH_2-Ph-COO-Ph^{FF}-CH_2CH_2-Ph^{FF}-CN$

$H-Ph-CH(CH_3)-CH_2-Cy-COO-Ph^{FF}-CH_2CH_2-Ph^{F}-CN$

$H-Ph-CH(CH_3)-CH_2-Ph^{FF}-COO-Cy-CH_2CH_2-Ph^{FF}-CN$

$H-Ph-CH(CH_3)-CH_2-Cy-COO-Cy-CH_2CH_2-Ph^{FF}-CN$

$H-Ph-CH(CH_3)-CH_2-Ph-OCO-Ph^{FF}-CH_2CH_2-Ph^{FF}-CN$

$H-Ph-CH(CH_3)-CH_2-Cy-OCO-Ph^{FF}-CH_2CH_2-Ph^{F}-CN$

$H-Ph-CH(CH_3)-CH_2-Ph^{FF}-OCO-Cy-CH_2CH_2-Ph^{FF}-CN$

$H-Ph-CH(CH_3)-CH_2-Cy-OCO-Cy-CH_2CH_2-Ph^{FF}-CN$

As preferred specific examples of the compound wherein $Z^7=CF_3$, the following compounds may be mentioned. $H-Ph-CH(CH_3)-CH_2-Ph-Ph^{FF}-Ph^{FF}-CF_3$

$H-Ph-CH(CH_3)-CH_2-Ph^{F}-Ph-Ph^{FF}-CF_3$

$H-Ph-CH(CH_3)-CH_2-Cy-Ph^{FF}-Ph^{F}-CF_3$

$H-Ph-CH(CH_3)-CH_2-Ph^{FF}-Cy-Ph^{FF}-CF_3$

$H-Ph-CH(CH_3)-CH_2-Cy-Cy-Ph^{FF}-CF_3$

$H-Ph-CH(CF_3)-CH_2-Ph^{FF}-Ph-Ph^{FF}-CF_3$

$H-Ph-CH^{F}-CH_2-Ph^{FF}-Ph-Ph^{FF}-CF_3$

$H-Ph-CH(CH_3)-CO-CH_2-Ph^{FF}-Ph-Ph^{FF}-CF_3$

$H-Ph-CH(CH_3)-CH_2-Ph-Ph^{FF}-COO-Ph^{FF}-CF_3$

$H-Ph-CH(CH_3)-CH_2-Cy-COO-Ph^{FF}-Ph^{F}-CF_3$

$H-Ph-CH(CH_3)-CH_2-Ph^{FF}-COO-Cy-Ph^{FF}-CF_3$

$H-Ph-CH(CH_3)-CH_2-Cy-Cy-COO-Ph^{FF}-CF_3$

$H-Ph-CH(CH_3)-CH_2-Cy-COO-Cy-Ph^{FF}-CF_3$

$H-Ph-CH(CH_3)-CH_2-Ph-Ph^{FF}-OCO-Ph^{FF}-CF_3$

$H-Ph-CH(CH_3)-CH_2-Cy-OCO-Ph^{FF}-Ph^{F}-CF_3$

$H-Ph-CH(CH_3)-CH_2-Ph^{FF}-OCO-Cy-Ph^{FF}-CF_3$

$H-Ph-CH(CH_3)-CH_2-Cy-Cy-OCO-Ph^{FF}-CF_3$

$H-Ph-CH(CH_3)-CH_2-Cy-OCO-Cy-Ph^{FF}-CF_3$

$H-Ph-CH(CH_3)-CH_2-Ph-Ph^{FF}-CH_2CH_2-Ph^{FF}-CF_3$

$H-Ph-CH(CH_3)-CH_2-Cy-CH_2CH_2-Ph^{FF}-Ph^{F}-CF_3$

$H-Ph-CH(CH_3)-CH_2-Ph^{FF}-CH_2CH_2-Cy-Ph^{FF}-CF_3$

$H-Ph-CH(CH_3)-CH_2-Cy-Cy-CH_2CH_2-Ph^{FF}-CF_3$

$H-Ph-CH(CH_3)-CH_2-Cy-CH_2CH_2-Cy-Ph^{FF}-CF_3$

$H-Ph-CH(CH_3)-CH_2-Ph-CH_2CH_2-Ph^{FF}-COO-Ph^{FF}-CF_3$

$H-Ph-CH(CH_3)-CH_2-Cy-CH_2CH_2-Ph^{FF}-COO-Ph^{F}-CF_3$

$H-Ph-CH(CH_3)-CH_2-Ph^{FF}-CH_2CH_2-Cy-COO-Ph^{FF}-CF_3$

$H-Ph-CH(CH_3)-CH_2-Cy-CH_2CH_2-Cy-COO-Ph^{FF}-CF_3$

$H-Ph-CH(CH_3)-CH_2-Ph-COO-Ph^{FF}-CH_2CH_2-Ph^{FF}-CF_3$

$H-Ph-CH(CH_3)-CH_2-Cy-COO-Ph^{FF}-CH_2CH_2-Ph^{F}-CF_3$

$H-Ph-CH(CH_3)-CH_2-Ph^{FF}-COO-Cy-CH_2CH_2-Ph^{FF}-CF_3$

$H-Ph-CH(CH_3)-CH_2-Cy-COO-Cy-CH_2CH_2-Ph^{FF}-CF_3$

$H-Ph-CH(CH_3)-CH_2-Ph-OCO-Ph^{FF}-CH_2CH_2-Ph^{FF}-CF_3$

$H-Ph-CH(CH_3)-CH_2-Cy-OCO-Ph^{FF}-CH_2CH_2-Ph^{F}-CF_3$

$H-Ph-CH(CH_3)-CH_2-Ph^{FF}-OCO-Cy-CH_2CH_2-Ph^{FF}-CF_3$

$H-Ph-CH(CH_3)-CH_2-Cy-OCO-Cy-CH_2CH_2-Ph^{FF}-CF_3$

As preferred specific examples of the compound wherein $Z^7$=$OCF_3$, the following compounds may be men-

tioned.

$H-Ph-CH(CH_3)-CH_2-Ph-Ph^{FF}-Ph^{FF}-OCF_3$

$H-Ph-CH(CH_3)-CH_2-Ph^{F}-Ph-Ph^{FF}-OCF_3$

$H-Ph-CH(CH_3)-CH_2-Cy-Ph^{FF}-Ph^{F}-OCF_3$

$H-Ph-CH(CH_3)-CH_2-Ph^{FF}-Cy-Ph^{FF}-OCF_3$

$H-Ph-CH(CH_3)-CH_2-Cy-Cy-Ph^{FF}-OCF_3$

$H-Ph-CH(CF_3)-CH_2-Ph^{FF}-Ph-Ph^{FF}-OCF_3$

$H-Ph-CHF-CH_2-Ph^{FF}-Ph-Ph^{FF}-OCF_3$

$H-Ph-CH(CH_3)-CO-CH_2-Ph^{FF}-Ph-Ph^{FF}-OCF_3$

$H-Ph-CH(CH_3)\ -CH_2-Ph-Ph^{FF}-COO-Ph^{FF}-OCF_3$

$H-Ph-CH(CH_3)\ -CH_2-Cy-COO-Ph^{FF}-Ph^{F}-OCF_3$

$H-Ph-CH(CH_3)-CH_2-Ph^{FF}-COO-Cy-Ph^{FF}-OCF_3$

$H-Ph-CH(CH_3)-CH_2-Cy-Cy-COO-Ph^{FF}-OCF_3$

$H-Ph-CH(CH_3)-CH_2-Cy-COO-Cy-Ph^{FF}-OCF_3$

$H-Ph-CH(CH_3)-CH_2-Ph-Ph^{FF}-OCO-Ph^{FF}-OCF_3$

$H-Ph-CH(CH_3)-CH_2-Cy-OCO-Ph^{FF}-Ph^{F}-OCF_3$

$H-Ph-CH(CH_3)-CH_2-Ph^{FF}-OCO-Cy-Ph^{FF}-OCF_3$

$H-Ph-CH(CH_3)-CH_2-Cy-Cy-OCO-Ph^{FF}-OCF_3$

$H-Ph-CH(CH_3)-CH_2-Cy-OCO-CY-Ph^{FF}-OCF_3$

$H-Ph-CH(CH_3)-CH_2-Ph-Ph^{FF}-CH_2CH_2-Ph^{FF}-OCF_3$

$H-Ph-CH(CH_3)-CH_2-Cy-CH_2CH_2-Ph^{FF}-Ph^{F}-OCF_3$

$H-Ph-CH(CH_3)-CH_2-Ph^{FF}-CH_2CH_2-Cy-Ph^{FF}-OCF_3$

$H-Ph-CH(CH_3)-CH_2-Cy-Cy-CH_2CH_2-Ph^{FF}-OCF_3$

$H-Ph-CH(CH_3)-CH_2-Cy-CH_2CH_2-Cy-Ph^{FF}-OCF_3$

$H-Ph-CH(CH_3)-CH_2-Ph-CH_2CH_2-Ph^{FF}-COO-Ph^{FF}-OCF_3$

$H-Ph-CH(CH_3)-CH_2-Cy-CH_2CH_2-Ph^{FF}-COO-Ph^{F}-OCF_3$

$H-Ph-CH(CH_3)-CH_2-Ph^{FF}-CH_2CH_2-Cy-COO-Ph^{FF}-OCF_3$

$H-Ph-CH(CH_3)-CH_2-Cy-CH_2CH_2-Cy-COO-Ph^{FF}-OCF_3$

$H-Ph-CH(CH_3)-CH_2-Ph-COO-Ph^{FF}-CH_2CH_2-Ph^{FF}-OCF_3$

H-Ph-CH($CH_3$)-$CH_2$-Cy-COO-$Ph^{FF}$-$CH_2CH_2$-$Ph^F$-$OCF_3$

H-Ph-CH($CH_3$)-$CH_2$-$Ph^{FF}$-COO-Cy-$CH_2CH_2$-$Ph^{FF}$-$OCF_3$

H-Ph-CH($CH_3$)-$CH_2$-Cy-COO-Cy-$CH_2CH_2$-$Ph^{FF}$-$OCF_3$

H-Ph-CH($CH_3$)-$CH_2$-Ph-OCO-$Ph^{FF}$-$CH_2CH_2$-$Ph^{FF}$-$OCF_3$

H-Ph-CH($CH_3$)-$CH_2$-Cy-OCO-$Ph^{FF}$-$CH_2CH_2$-$Ph^F$-$OCF_3$

H-Ph-CH($CH_3$)-$CH_2$-$Ph^{FF}$-OCO-Cy-$CH_2CH_2$-$Ph^{FF}$-$OCF_3$

H-Ph-CH($CH_3$)-$CH_2$-Cy-OCO-Cy-$CH_2CH_2$-$Ph^{FF}$-$OCF_3$

As preferred specific examples of the compound wherein $Z^7$=F, the following compounds may be mentioned.

H-Ph-CH($CH_3$)-$CH_2$-Ph-$Ph^{FF}$-$Ph^{FF}$-F

H-Ph-CH($CH_3$)-$CH_2$-$Ph^F$-Ph-$Ph^{FF}$-F

H-Ph-CH($CH_3$)-$CH_2$-Cy-$Ph^{FF}$-$Ph^F$-F

H-Ph-CH($CH_3$)-$CH_2$-$Ph^{FF}$-Cy-$Ph^{FF}$-F

H-Ph-CH($CH_3$)-$CH_2$-Cy-Cy-$Ph^{FF}$-F

H-Ph-CH($CF_3$)-$CH_2$-$Ph^{FF}$-Ph-$Ph^{FF}$-F

H-Ph-CHF-$CH_2$-$Ph^{FF}$-Ph-$Ph^{FF}$-F

H-Ph-CH($CH_3$)-CO-$CH_2$-$Ph^{FF}$-Ph-$Ph^{FF}$-F

H-Ph-CH($CH_3$)-$CH_2$-Ph-$Ph^{FF}$-COO-$Ph^{FF}$-F

H-Ph-CH($CH_3$)-$CH_2$-Cy-COO-$Ph^{FF}$-$Ph^F$-F

H-Ph-CH($CH_3$)-$CH_2$-$Ph^{FF}$-COO-Cy-$Ph^{FF}$-F

H-Ph-CH($CH_3$)-$CH_2$-Cy-Cy-COO-$Ph^{FF}$-F

H-Ph-CH($CH_3$)-$CH_2$-Cy-COO-Cy-$Ph^{FF}$-F

H-Ph-CH($CH_3$)-$CH_2$-Ph-$Ph^{FF}$-OCO-$Ph^{FF}$-F

H-Ph-CH($CH_3$)-$CH_2$-Cy-OCO-$Ph^{FF}$-$Ph^F$-F

H-Ph-CH($CH_3$)-$CH_2$-$Ph^{FF}$-OCO-Cy-$Ph^{FF}$-F

H-Ph-CH($CH_3$)-$CH_2$-Cy-Cy-OCO-$Ph^{FF}$-F

H-Ph-CH($CH_3$)-$CH_2$-Cy-OCO-Cy-$Ph^{FF}$-F

H-Ph-CH($CH_3$)-$CH_2$-Ph-$Ph^{FF}$-$CH_2CH_2$-$Ph^{FF}$-F

H-Ph-CH($CH_3$)-$CH_2$-Cy-$CH_2CH_2$-$Ph^{FF}$-$Ph^F$-F

H-Ph-CH($CH_3$)-$CH_2$-$Ph^{FF}$-$CH_2CH_2$-Cy-$Ph^{FF}$-F

$H-Ph-CH(CH_3)-CH_2-Cy-Cy-CH_2CH_2-Ph^{FF}-F$

$H-Ph-CH(CH_3)-CH_2-Cy-CH_2CH_2-Cy-Ph^{FF}-F$

$H-Ph-CH(CH_3)-CH_2-Ph-CH_2CH_2-Ph^{FF}-COO-Ph^{FF}-F$

$H-Ph-CH(CH_3)-CH_2-Cy-CH_2CH_2-Ph^{FF}-COO-Ph^{F}-F$

$H-Ph-CH(CH_3)-CH_2-Ph^{FF}-CH_2CH_2-Cy-COO-Ph^{FF}-F$

$H-Ph-CH(CH_3)-CH_2-Cy-CH_2CH_2-Cy-COO-Ph^{FF}-F$

$H-Ph-CH(CH_3)-CH_2-Ph-COO-Ph^{FF}-CH_2CH_2-Ph^{FF}-F$

$H-Ph-CH(CH_3)-CH_2-Cy-COO-Ph^{FF}-CH_2CH_2-Ph^{F}-F$

$H-Ph-CH(CH_3)-CH_2-Ph^{FF}-COO-Cy-CH_2CH_2-Ph^{FF}-F$

$H-Ph-CH(CH_3)-CH_2-Cy-COO-Cy-CH_2CH_2-Ph^{FF}-F$

$H-Ph-CH(CH_3)-CH_2-Ph-OCO-Ph^{FF}-CH_2CH_2-Ph^{FF}-F$

$H-Ph-CH(CH_3)-CH_2-Cy-OCO-Ph^{FF}-CH_2CH_2-Ph^{F}-F$

$H-Ph-CH(CH_3)-CH_2-Ph^{FF}-OCO-Cy-CH_2CH_2-Ph^{FF}-F$

$H-Ph-CH(CH_3)-CH_2-Cy-OCO-Cy-CH_2CH_2-Ph^{FF}-F$

As preferred specific examples of the compound wherein $Z^7=SF_5$, the following compounds may be mentioned.

$H-Ph-CH(CH_3)-CH_2-Ph-Ph^{FF}-Ph^{FF}-SF_5$

$H-Ph-CH(CH_3)-CH_2-Ph^{F}-Ph-Ph^{FF}-SF_5$

$H-Ph-CH(CH_3)-CH_2-Cy-Ph^{FF}-Ph^{F}-SF_5$

$H-Ph-CH(CH_3)-CH_2-Ph^{FF}-Cy-Ph^{FF}-SF_5$

$H-Ph-CH(CH_3)-CH_2-Cy-Cy-Ph^{FF}-SF_5$

$H-Ph-CH(CF_3)-CH_2-Ph^{FF}-Ph-Ph^{FF}-SF_5$

$H-Ph-CHF-CH_2-Ph^{FF}-Ph-Ph^{FF}-SF_5$

$H-Ph-CH(CH_3)-CO-CH_2-Ph^{FF}-Ph-Ph^{FF}-SF_5$

$H-Ph-CH(CH_3)-CH_2-Ph-Ph^{FF}-COO-Ph^{FF}-SF_5$

$H-Ph-CH(CH_3)-CH_2-Cy-COO-Ph^{FF}-Ph^{F}-SF_5$

$H-Ph-CH(CH_3)-CH_2-Ph^{FF}-COO-Cy-Ph^{FF}-SF_5$

$H-Ph-CH(CH_3)-CH_2-Cy-Cy-COO-Ph^{FF}-SF_5$

$H-Ph-CH(CH_3)-CH_2-Cy-COO-Cy-Ph^{FF}-SF_5$

$H-Ph-CH(CH_3)-CH_2-Ph-Ph^{FF}-OCO-Ph^{FF}-SF_5$

H-Ph-CH($CH_3$)-$CH_2$-Cy-OCO-$Ph^{FF}$-$Ph^F$-$SF_5$

H-Ph-CH($CH_3$)-$CH_2$-$Ph^{FF}$-OCO-Cy-$Ph^{FF}$-$SF_5$

H-Ph-CH($CH_3$)-$CH_2$-Cy-Cy-OCO-$Ph^{FF}$-$SF_5$

H-Ph-CH($CH_3$)-$CH_2$-Cy-OCO-Cy-$Ph^{FF}$-$SF_5$

H-Ph-CH($CH_3$)-$CH_2$-Ph-$Ph^{FF}$-$CH_2CH_2$-$Ph^{FF}$-$SF_5$

H-Ph-CH($CH_3$)-$CH_2$-Cy-$CH_2CH_2$-$Ph^{FF}$-$Ph^F$-$SF_5$

H-Ph-CH($CH_3$)-$CH_2$-$Ph^{FF}$-$CH_2CH_2$-Cy-$Ph^{FF}$-$SF_5$

H-Ph-CH($CH_3$)-$CH_2$-Cy-Cy-$CH_2CH_2$-$Ph^{FF}$-$SF_5$

H-Ph-CH($CH_3$)-$CH_2$-Cy-$CH_2CH_2$-Cy-$Ph^{FF}$-$SF_5$

H-Ph-CH($CH_3$)-$CH_2$-Ph-$CH_2CH_2$-$Ph^{FF}$-COO-$Ph^{FF}$-$SF_5$

H-Ph-CH($CH_3$)-$CH_2$-Cy-$CH_2CH_2$-$Ph^{FF}$-COO-$Ph^F$-$SF_5$

H-Ph-CH($CH_3$)-$CH_2$-$Ph^{FF}$-$CH_2CH_2$-Cy-COO-$Ph^{FF}$-$SF_5$

H-Ph-CH($CH_3$)-$CH_2$-Cy-$CH_2CH_2$-Cy-COO-$Ph^{FF}$-$SF_5$

H-Ph-CH($CH_3$)-$CH_2$-Ph-COO-$Ph^{FF}$-$CH_2CH_2$-$Ph^{FF}$-$SF_5$

H-Ph-CH($CH_3$)-$CH_2$-Cy-COO-$Ph^{FF}$-$CH_2CH_2$-$Ph^F$-$SF_5$

H-Ph-CH($CH_3$)-$CH_2$-$Ph^{FF}$-COO-Cy-$CH_2CH_2$-$Ph^{FF}$-$SF_5$

H-Ph-CH($CH_3$)-$CH_2$-Cy-COO-Cy-$CH_2CH_2$-$Ph^{FF}$-$SF_5$

H-Ph-CH($CH_3$)-$CH_2$-Ph-OCO-$Ph^{FF}$-$CH_2CH_2$-$Ph^{FF}$-$SF_5$

H-Ph-CH($CH_3$)-$CH_2$-Cy-OCO-$Ph^{FF}$-$CH_2CH_2$-$Ph^F$-$SF_5$

H-Ph-CH($CH_3$)-$CH_2$-$Ph^{FF}$-OCO-Cy-$CH_2CH_2$-$Ph^{FF}$-$SF_5$

H-Ph-CH($CH_3$)-$CH_2$-Cy-OCO-Cy-$CH_2CH_2$-$Ph^{FF}$-$SF_5$

Explanation of production process

The optically active compounds (4) of the present invention are novel compounds, and may be produced in accordance with the following process for example. The following production process is a preferred example, and other various production processes may be employed as the case requires. In the following explanation, -Ph'- represents the formula (4-7), and -Ph"- represents the formula (4-8).

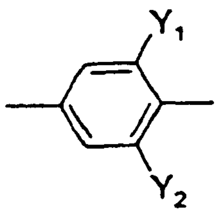
(4 − 8)

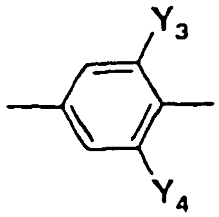

(4−7)

[Process 10]

In a case where $A^8$ is $CH_2$, each of $B^1$, $B^2$, $D^1$ and $D^2$ is a single bond, and $B^3$ is -COO-

| | |
|---|---|
| H-Ph-$CHX^3$-COOH | Formula a1 |
| ↓ $SOCl_2$ | |
| H-Ph-$CHX^3$-COCl | Formula b1 |
| ↓ $Fe(acac)_3$, BrMg-Ph'-Cl | Formula c1 |
| H-Ph-$CHX^3$-CO-Ph'-Cl | Formula d1 |
| ↓ $Et_3SiH$, $CF_3COOH$ | |
| H-Ph-$CHX^3$-$CH_2$-Ph'-Cl | Formula e1 |
| ↓ EtMgBr, Mg | |
| ↓ $CO_2$, $H^+$ | |
| H-Ph-$CHX^3$-$CH_2$-Ph'-COOH | Formula f1 |
| ↓ $SOCl_2$ | |
| H-Ph-$CHX^3$-$CH_2$-Ph'-COCl | Formula g1 |
| ↓ pyridine, HO-Ph"-$Z^7$ | Formula h1 |
| H-Ph-$CHX^3$-$CH_2$-Ph'-COO-Ph"-$Z^7$ | Formula i1 |

An optically active carboxylic acid (formula a1) is subjected to acid chloridation with e.g. thionyl chloride to obtain an acid chloride (formula b1), which is reacted with a Grignard reagent (formula c1) in the presence of an organic metal catalyst such as iron(III) acetylacetonate [$Fe(acac)_3$] to obtain a ketone (formula d1). The ketone (formula d1) is reduced with a reducing agent such as triethylsilane in the presence of trifluoroacetic acid to obtain a compound (formula e1). The compound (formula e1) is formed into a Grignard reagent with magnesium in the presence of ethyl magnesium bromide, which is reacted with carbon dioxide and then hydrolyzed with an acid to obtain a carboxylic acid (formula f1), which is subjected to acid chloridation with e.g. thionyl chloride to obtain an acid chloride (formula g1), which is further reacted with a compound (formula h1) in the presence of e.g. pyridine to obtain an aimed optically active compound (formula i1).

[Process 11]

In a case where $A^8$ is $CH_2$, each of $B^1$, $B^2$, $B^3$, $D^1$ and $D^2$ is a single bond, and $Z_3$ is -CN

| | |
|---|---|
| H-Ph-$CHX^3$-$CH_2$-Ph'-Cl | Formula e1 |
| ↓ EtMgBr, Mg | |
| ↓ $B(OCH_3)_3$, $H^+$ | |
| H-Ph-$CHX^3$-$CH_2$-Ph'-$B(OH)_2$ | Formula a2 |
| ↓ Pd(PPh3)4, Br-Ph"-H | Formula b2 |
| H-Ph-$CHX^3$-$CH_2$-Ph'-Ph"-H | Formula c2 |
| ↓ BuLi | |
| ↓ $CO_2$, $H^+$ | |
| H-Ph-$CHX^3$-$CH_2$-Ph'-Ph"-COOH | Formula d2 |
| ↓ $SOCl_2$ | |
| H-Ph-$CHX^3$-$CH_2$-Ph'-Ph"-COCl | Formula e2 |

(continued)

↓ $NH_4OH$
H-Ph-$CHX^3$-$CH_2$-Ph'-Ph"-$CONH_2$ Formula f2
↓ pyridine, TsCl
H-Ph-$CHX^3$-$CH_2$-Ph'-Ph"-CN Formula g2

A compound (formula e1) is formed into a Grignard reagent with magnesium in the presence of ethyl magnesium bromide, which is reacted with trimethylborate and then hydrolyzed with an acid to obtain a compound (formula a2), which is reacted with a compound (formula b2) in the presence of an organic metal catalyst such as $Pd(PPh_3)_4$ to obtain a compound (formula c2). The compound (formula c2) is subjected to lithiation with butyllithium and reacted with carbon dioxide, and then hydrolyzed with an acid to obtain a carboxylic acid (formula d2). The carboxylic acid (formula d2) is subjected to acid chloridation with e.g. thionyl chloride to obtain an acid chloride (formula e2), which is reacted with ammonia water to obtain an amide (formula f2), which is further subjected to dehydration with e.g. p-toluenesulfonyl chloride in the presence of e.g. pyridine to obtain an aimed optically active compound (formula g2).

[Process 12]

In a case where $A^8$ is -$CH_2$-, each of $B^1$, $B^2$, $D^1$ and $D^2$ is a single bond, and $B^3$ is -OCO-

H-Ph-$CHX^3$-COOH Formula a1
↓ $SOCl_2$
H-Ph-$CHX^3$-COCl Formula b1
↓ $AlCl_3$, H-Ph'-$OCH_3$ Formula a3
H-Ph-$CHX^3$-CO-Ph'-$OCH_3$ Formula b3
↓ $AlCl_3$, $LiAlH_4$
H-Ph-$CHX^3$-$CH_2$-Ph'-$OCH_3$ Formula c3
↓ HBr, $CH_3COOH$
H-Ph-$CHX^3$-$CH_2$-Ph'-OH Formula d3
↓ pyridine, ClOC-Ph"-$Z^7$ Formula e3
H-Ph-$CHX^3$-$CH_2$-Ph'-OCO-Ph"-$Z^7$ Formula f3

An optically active carboxylic acid (formula a1) is subjected to acid chloridation with e.g. thionyl chloride to obtain an acid chloride (formula b1), which is subjected to Friedel-Crafts reaction with a compound (formula a3) in the presence of a Lewis acid such as aluminum chloride to obtain a ketone (formula b3). The ketone (formula b3) is reduced with a reducing agent such as lithium aluminum hydride in the presence of a Lewis acid such as aluminum chloride to obtain a compound (formula c3). The compound (formula c3) is treated with e.g. hydrobromic acid in the presence of acetic acid to obtain a compound (formula d3), which is reacted with an acid chloride (formula e3) in the presence of e.g. pyridine to obtain an aimed optically active compound (formula f3).

[Process 13]

In a case where $A^8$ is $CH_2$, each of $B^1$, $B^2$, $D^1$ and $D^2$ is a single bond, and $B^3$ is -CF=CF-

H-Ph-$CHX^3$-$CH_2$-Ph'-H Formula a4
↓ BuLi
↓ $CF_2$=CF-Ph"-$Z^7$ Formula b4
H-Ph-$CHX^3$-$CH_2$-Ph'-CF=CF-Ph"-$Z^7$ Formula c4

A compound (formula a4) is subjected to lithiation with butyllithium and reacted with a compound (formula b4) to obtain an aimed optically active compound (formula c4).

[Process 14]

In a case where $A^8$ is -$CH_2$-, each of $B^1$, $B^2$, $D^1$ and $D^2$ is a single bond, and $B^3$ is -$CF_2$O-

| | |
|---|---|
| H-Ph-$CHX^3$-$CH_2$-Ph'-H | Formula a4 |
| ↓BuLi | |
| ↓$CF_2Br_2$ | |
| H-Ph-$CHX^3$-$CH_2$-Ph'-$CF_2$Br | Formula a5 |
| ↓$K_2CO_3$, HO-Ph"-$Z^7$ | Formula b5 |
| H-Ph-$CHX^3$-$CH_2$-Ph'-$CF_2$O-Ph"-$Z^7$ | Formula c5 |

A compound (formula a4) is subjected to lithiation with butyllithium, and reacted with dibromodifluoromethane to obtain a compound (formula a5), which is reacted with a compound (formula b5) in the presence of e.g. potassium carbonate to obtain an aimed optically active compound (formula c5).

In the above process, in each reaction, the optical purity of the optically active compound of each formula is maintained. Either process is a process which can maintain the absolute configuration of the material, and accordingly the material compound may optionally be changed depending upon the absolute configuration of the aimed optically active compound (4).

It is preferred that one type or at least two types of the optically active compound (4) of the present invention is incorporated in another liquid crystal material and/or non-liquid crystal material (hereinafter other liquid crystal material and non-liquid crystal material will generically be referred to as "another material") to obtain a liquid crystal composition.

In a case where the optically active compound (4) is incorporated in another material to obtain a liquid crystal composition, it is preferred that many types of the optically active compounds (4) are incorporated, and in such a case, the amount of one type of the optically active compound (4) is preferably from 0.1 to 10 parts by mass per 100 parts by mass of another material, and in a case where a plurality of the optically active compounds (4) are incorporated, their total amount is preferably from 0.1 to 50 parts by weight per 100 parts by mass of another material.

As another material, preferably the following compounds may be exemplified. In the following formulae, each of $R^A$ and $R^B$ which are independent of each other, is an alkyl group, an alkoxy group, a halogen atom or a cyano group, Cy is a trans-1,4-hexylene group, and $Ph^A$ is a non-substituted or substituted 1,4-phenylene group.

$R^A$-Cy-Cy-$R^B$

$R^A$-Cy-$Ph^A$-$R^B$

$R^A$-$Ph^A$-$Ph^A$-$R^B$

$R^A$-Cy-COO-$Ph^A$-$R^B$

$R^A$-$Ph^A$-COO-$Ph^A$-$R^B$

$R^A$-$Ph^A$-C≡C-$Ph^A$-$R^B$

$R^A$-Cy-$CH_2CH_2$-$Ph^A$-C≡C-$Ph^A$-$R^B$

$R^A$-Cy-$CH_2CH_2$-$Ph^A$-$R^B$

$R^A$-$Ph^A$-$CH_2CH_2$-$Ph^A$-$R^B$

$R^A$-Cy-Cy-$Ph^A$-$R^B$

$R^A$-Cy-$Ph^A$-$Ph^A$-$R^B$

$R^A$-Cy-$Ph^A$-$Ph^A$-Cy-$R^B$

$R^A$-$Ph^A$-$Ph^A$-$Ph^A$-$R^B$

$R^A$-Cy-COO-$Ph^A$-$Ph^A$-$R^B$

$R^A$-Cy-$Ph^A$-COO-$Ph^A$-$R^B$

$R^A$-Cy-COO-$Ph^A$-COO-$Ph^A$-$R^B$

$R^A$-$Ph^A$-COO-$Ph^A$-COO-$Ph^A$-$R^B$

$R^A$-$Ph^A$-COO-$Ph^A$-OCO-$Ph^A$-$R^B$

The above compounds are mentioned as preferred examples of another material, and the ring structure of the above compounds may be substituted with another 6-membered ring such as a cyclohexane ring or a benzene ring, or another heterocyclic ring such as a pyridine ring or a dioxane ring, the terminal hydrogen atom of the compounds may be substituted with e.g. a halogen atom, a cyano group or a methyl group, and the binding group between rings may be changed to another binding group. They may optionally be changed depending upon the required performances.

The liquid crystal composition containing the optically active compound (4) of the present invention is sandwiched between substrates provided with an electrode by e.g. a method of injecting it into a liquid crystal cell to constitute a liquid crystal element. As the process for producing a liquid crystal element, basically the following process may be mentioned. Namely, on a substrate of e.g. plastic or glass, an undercoat layer of e.g. $SiO_2$ or $Al_2O_3$ or a color filter layer is formed as the case requires, an electrode of e.g. $In_2O_3$-$SnO_2$ (ITO) or $SnO_2$ is provided, followed by patterning, and an overcoat layer of e.g. polyimide, polyamide, $SiO_2$ or $Al_2O_3$ is formed as the case requires, followed by alignment treatment, and a sealing material is printed thereon, and such substrates are disposed so that the electrode sides face each other and the periphery is sealed, and the sealing agent is cured to form an empty cell.

To this empty cell, the liquid crystal composition containing the optically active compound (4) of the present invention is injected, and the inlet is sealed with a sealing compound to constitute a liquid crystal cell. On this liquid crystal cell, as the case requires, e.g. a deflecting plate, a color deflecting plate, a light source, a color filter, a semipermeable reflecting plate, a reflecting plate, an optical waveguide or an ultraviolet cut filter is laminated, e.g. characters or figures are printed, or a nonglare treatment is carried out, to produce a liquid crystal element.

The optically active compound (4) of the present invention has a high helical twisting power, and accordingly a liquid crystal composition having an aimed helical pitch can be obtained by addition of a small amount to the liquid crystal composition as compared with a conventional optically active compound. Further, at the same time, the optically active compound (4) has a high dielectric anisotropy ($\Delta\varepsilon$), and thus when this is added to the liquid crystal composition, the liquid crystal composition having a high $\Delta\varepsilon$ as compared with a case where a conventional optically active compound is employed can be obtained, and driving at a low driving voltage as compared with a case where a conventional optically active compound is employed can be achieved.

When the liquid crystal composition containing the optically active compound (4) is employed to obtain a TN or STN liquid crystal display element, uniform twist alignment can be achieved, and when it is employed to obtain a reflective cholesteric liquid crystal element, an aimed reflection wavelength can be obtained. Further, the liquid crystal composition containing the optically active compound (4) may also be employed by various modes such as an active matrix element, a polymer dispersion liquid crystal element, a GH liquid crystal element employing a polychromatic colorant, and a ferroelectric liquid crystal element. Further, it may also be employed for applications other than for display, such as a dimmer element, a dimmer window, an optical shutter, a polarization exchange element, an optical color filter, a colored film, an optical recording element or a temperature indicator.

Now, the present invention will be explained more specifically with reference to Examples.

EXAMPLE 4-1

Preparation of (4-cyano-3,5-difluoro)phenyl (R)-4-(2-phenylpropyl)benzoate [H-Ph-CH($CH_3$)-$CH_2$-Ph-COO-$Ph^{FF}$-CN]

<u>First step</u>

Into a 10L four-necked flask, 600 g (4.00 mol) of (S)-2-phenylpropionic acid, 2.4L of tetrachloroethylene, 951 g (8.00 mol) of thionyl chloride and a small amount of dimethyl aniline were added, followed by stirring at room temperature overnight, and excess of thionyl chloride and tetrachloroethylene were distilled off under reduced pressure to obtain 691 g of (S)-2-phenylpropionic chloride.

Into a 10L four-necked flask (flask A), 102 g (4.20 mol) of pieces of magnesium, 200 mL of anhydrous tetrahydrofuran and a small amount of iodine powder were added, and a small amount of a solution having 765 g (4.00 mol) of 1-bromo-4-chlorobenzene dissolved in 7.8L of anhydrous tetrahydrofuran was dropwise added thereto in an atmosphere of nitrogen, and assuming that the reaction started when the color of iodine disappeared, the rest of the solution was dropwise added thereto over a period of 3 hours while maintaining the reaction temperature to be at most 30°C, followed by stirring at room temperature for 1 hour after completion of the dropwise addition to prepare the Grignard reagent.

Into a 20L four-necked flask (flask B), 691 g of (S)-2-phenylpropionic chloride and 4.4L of toluene were put and cooled to -10°C in an atmosphere of nitrogen, and 1.41 g (4.00 mmol) of iron(III) acetylacetonate was added thereto. While maintaining the reaction temperature to be at most -10°C, the Grignard reagent prepared in the flask A was dropwise added thereto over a period of 4 hours in an atmosphere of nitrogen, and the temperature was raised to room temperature after completion of dropwise addition, followed by stirring overnight, then the mixture was cooled to 10°C, and 4L of diluted hydrochloric acid was added thereto.

Then, the organic layer was separated, the aqueous layer was extracted with toluene, the toluene layer and the organic layer were put together, washed with water and saturated salt solution and dried over anhydrous magnesium sulfate, and the solvent was distilled off to obtain a crude product. The crude product was purified by silica gel column chromatography (developing solvent: hexane, toluene) and recrystallized from ethanol to obtain 329 g (1.34 mol) of (S)-1-(4-chlorophenyl)-2-phenylpropane-1-one [H-Ph-CH($CH_3$)-CO-Ph-Cl] as white crystals (yield: 34%).
MS m/e: 244 ($M^+$)

Second step

Into a 5L four-necked flask, 320 g (1.31 mol) of (S)-1-(4-chlorophenyl)-2-phenylpropane-1-one [H-Ph-CH($CH_3$)-CO-Ph-Cl] obtained in first step and 1.49 kg (13.1 mol) of trifluoroacetic acid were added and cooled to 0°C, 380 g (3.27 mol) of triethylsilane was dropwise added thereto over a period of 1 hour while maintaining the reaction temperature to be at most 5°C, and the temperature was raised to room temperature after completion of the dropwise addition, followed by stirring for 3 hours.

Then, 1L of toluene was added, trifluoroacetic acid was distilled off under reduced pressure, 1L of toluene was added thereto, washing with a 5% sodium hydrogen carbonate aqueous solution, water and saturated salt solution and drying over anhydrous magnesium sulfate were carried out, and the solvent and by-products were distilled off to obtain a crude product. This was purified by silica gel column chromatography (developing solvent: hexane) to obtain 219 g (949 mmol) of (R)-1-(4-chlorophenyl)-2-phenylpropane [H-Ph-CH($CH_3$)-$CH_2$-Ph-Cl] as a colorless liquid (yield: 72%).
MS m/e: 230 ($M^+$)

Third step

Into a 1L four-necked flask, 11.1 g (455 mmol) of pieces of magnesium, 20 mL of anhydrous tetrahydrofuran and a small amount of iodine powder were added. A small amount of a solution having 23.6 g (217 mmol) of ethyl bromide dissolved in 124 mL of anhydrous tetrahydrofuran was dropwise added thereto in an atmosphere of nitrogen, and when the color of iodine disappeared, the rest of the solution was dropwise added thereto over a period of 1 hour while maintaining the reaction temperature to be at most 25°C, stirring was carried out at room temperature for 1 hour after completion of the dropwise addition, and 50 g (217 mmol) of (R)-1-(4-chlorophenyl)-2-phenylpropane [H-Ph-CH($CH_3$)-$CH_2$-Ph-Cl] obtained in second step was added thereto, followed by stirring under reflux with heating for 6 hours.

Then, 290 mL of anhydrous tetrahydrofuran was added thereto, the mixture was cooled to -30°C, carbon dioxide gas was blown while maintaining the temperature to be at most -20°C, and after heat generation disappeared, the temperature was raised to room temperature while blowing of carbon dioxide gas was continued. The reaction solution was poured into diluted hydrochloric acid cooled with ice, unreacted magnesium was removed by filtration, the organic phase was separated, the aqueous phase was extracted with methyl-t-butyl ether, the ether layer and the organic phase were put together, washed with water and saturated salt solution and dried over anhydrous sodium sulfate, and the solvent and by-products were distilled off to obtain crystals of a crude product. The crystals were recrystallized from toluene to obtain 44.3 g (184 mmol) of (R)-4-(2-phenylpropyl)benzoic acid [H-Ph-CH($CH_3$)-$CH_2$-Ph-COOH] as white crystals (yield: 85%).

Fourth step

Into a 200 mL eggplant-type flask, 20.0 g (83.2 mmol) of (R)-4-(2-phenylpropyl)benzoic acid [H-Ph-CH($CH_3$)-$CH_2$-Ph-COOH] obtained in third step, 80 mL of tetrachloroethylene and 19.8 g (166 mmol) of thionyl chloride were put, followed by stirring at 70°C for 3 hours, and then excess of thionyl chloride and tetrachloroethylene were distilled off under reduced pressure to obtain 22.0 g of (R)-4-(2-phenylpropyl) benzoyl chloride [H-Ph-CH($CH_3$)-$CH_2$-Ph-COCl].

Into a 200 mL four-necked flask, 22.0 g of (R)-4-(2-phenylpropyl)benzoyl chloride [H-Ph-CH($CH_3$)-$CH_2$-Ph-COCl], 103 mL of toluene, 12.9 g (83.2 mmol) of 3,5-difluoro-4-cyanophenol and 7.90 g (99.9 mmol) of pyridine were put, followed by stirring at room temperature overnight. Water was added to the reaction solution to separate the organic layer, the aqueous layer was extracted with toluene, the toluene layer and the organic layer were put together, washed with diluted hydrochloric acid, a sodium hydrogen carbonate aqueous solution and saturated salt solution and dried over

anhydrous magnesium sulfate, and the solvent was distilled off to obtain a crude product.

The above crude product was purified by silica gel column chromatography (developing solvent: hexane/toluene=3/1) and recrystallized from ethanol to obtain 23.6 g (62.4 mmol) of (4-cyano-3,5-difluoro)phenyl (R)-4-(2-phenylpropyl)benzoate [H-Ph-CH($CH_3$)-$CH_2$-Ph-COO-$Ph^{FF}$-CN] as white crystals (yield: 75%).

Melting point: 65.3 to 66.1°C

MS m/e: 377 ($M^+$)

$^1$H-NMR ($CDCl_3$) δ (ppm : from TMS) : 1.29 (d, 3 H), 2.88-3.11 (m, 3 H), 7.03 (d, 2 H), 7.13-7.30 (m, 7 H), 7.99 (d, 2 H)

$^{19}$F-NMR ($CDCl_3$) δ (ppm: from $CFCl_3$) : -102.7 (d, $J_{F-H}$=6.1 Hz)

EXAMPLE 4-2 .

Preparation of (4-cyano-3-fluoro)phenyl (R)-4-(2-phenylpropyl)benzoate [H-Ph-CH($CH_3$)-$CH_2$-Ph-COO-$Ph^F$-CN]

A reaction was carried out in the same manner as in fourth step of Example 1 except that 11.4 g (83.2 mmol) of 3-fluoro-4-cyanophenol was employed instead of 3,5-difluoro-4-cyanophenol in fourth step of Example 4-1 to obtain 21.5 g (59.9 mmol) of (4-cyano-3-fluoro)phenyl (R)-4-(2-phenylpropyl)benzoate [H-Ph-CH($CH_3$)-$CH_2$-Ph-COO-$Ph^F$-CN] as white crystals (yield: 72%).

H-Ph-CH($CH_3$)-$CH_2$-Ph-COO-$Ph^F$-CN

Melting point: 77.9 to 79.1°C

MS m/e: 359 ($M^+$)

$^1$H-NMR ($CDCl_3$) δ (ppm : from TMS) : 1.30 (d, 3 H), 2.89-3.09 (m, 3 H), 7.14-7.30 (m, 9 H), 7.67 (t, 1 H), 8.01 (d, 2 H)

$^{19}$F-NMR ($CDCl_3$) δ (ppm : from $CFCl_3$) : -103.9 (t, $J_{F-H}$=9. 2Hz)

EXAMPLE 4-3

Preparation of (R)-2,6-difluoro-4-(4-(2-phenylpropyl)phenyl)benzonitrile [H-Ph-CH($CH_3$)-$CH_2$-Ph-$Ph^{FF}$-CN]

First step

Into a 1L four-necked flask (flask A), 12.6 g (520 mmol) of pieces of magnesium, 30 mL of anhydrous tetrahydrofuran and a small amount of iodine powder were put. A small amount of a solution having 4.72 g (43.3 mmol) of ethyl bromide dissolved in 20 mL of anhydrous tetrahydrofuran was dropwise added thereto in an atmosphere of nitrogen.

When the color of iodine disappeared, the rest of the solution was dropwise added thereto while maintaining the reaction temperature to be at most 25°C, and after completion of the dropwise addition, a solution having 100 g (433 mmol) of (R)-1-(4-chlorophenyl)-2-phenylpropane [H-Ph-CH($CH_3$)-$CH_2$-Ph-Cl] obtained in second step of Example 1 dissolved in 110 mL of anhydrous tetrahydrofuran was added thereto, followed by stirring under reflux with heating for 6 hours, the mixture was cooled to room temperature, and 320 mL of anhydrous tetrahydrofuran was added thereto to prepare a Grignard reagent.

Into a 1L four-necked flask (flask B), 54.0 g (520 mmol) of trimethylborate and 108 mL of anhydrous tetrahydrofuran were put and cooled to -30°C, the Grignard reagent prepared in the flask A was dropwise added over a period of 30 minutes in an atmosphere of nitrogen while maintaining the temperature to be at most -30°C, and the temperature was raised to room temperature after completion of the dropwise addition, followed by stirring at room temperature overnight. Diluted hydrochloric acid was added to the reaction solution, followed by stirring at room temperature for 1 hour, and then the organic phase was separated, the aqueous phase was extracted with methyl-t-butyl ether, the ether layer and the organic phase were put together, washed with water and saturated salt solution and dried over anhydrous sodium sulfate, and the solvent was distilled off to obtain 92.6 g (386 mmol) of (R)-4-(2-phenylpropyl)phenylboric acid [H-Ph-CH($CH_3$)-$CH_2$-Ph-$B(OH)_2$] (yield: 89%).

Second step

Into a 1L four-necked flask, 50.0 g (208 mmol) of (R)-4-(2-phenylpropyl)phenylboric acid [H-Ph-CH ($CH_3$)-$CH_2$-Ph-$B(OH)_2$] obtained in first step, 40.2 g (208 mmol) of 1-bromo-3,5-difluorobenzene, 12.0 g (10.4 mmol) of tetrakistriphenylphosphinepalladium [$Pd(PPh_3)_4$], 300 mL of a 2 mol/L sodium carbonate aqueous solution and 300 mL of 1,2-dimethoxyethane were put, followed by stirring under reflux with heating for 4 hours.

Then, the mixture was cooled to room temperature, toluene was added to the reaction solution to separate the organic layer, the aqueous layer was extracted with toluene, the toluene layer and the organic layer were put together,

washed with water and saturated salt solution and dried over anhydrous magnesium sulfate, and the solvent was distilled off to obtain a crude product. The crude product was purified by silica gel column chromatography (developing solvent: hexane) and recrystallized from ethanol to obtain 35.3 g (115 mmol) of (R)-3,5-difluoro-1-(4-(2-phenylpropyl)phenyl) benzene [H-Ph-CH($CH_3$)-$CH_2$-Ph-$Ph^{FF}$-H] as white crystals (yield: 55%).

Melting point: 49.8 to 51.3°C
MS m/e: 308 ($M^+$)
$^1$H-NMR ($CDCl_3$) δ (ppm : from TMS) : 1.27 (d, 3 H), 2.78-2.85 (m, 1 H), 2.94-3.07 (m, 2 H), 6.74 (t, 1 H), 7.05-7.31 (m, 9 H), 7.40 (d, 2 H)
$^{19}$F-NMR ($CDCl_3$) δ (ppm : from $CFCl_3$) : -110.4 (t. $J_{F-H}$=7.6 Hz)

Third step

Into a 500 mL four-necked flask, 35.0 g (114 mmol) of (R)-3,5-difluoro-1-(4-(2-phenylpropyl)phenyl)benzene [H-Ph-CH($CH_3$)-$CH_2$-Ph-$Ph^{FF}$-H] obtained in second step and 175 mL of anhydrous tetrahydrofuran were put and cooled to -70°C in an atmosphere of nitrogen, and 90 mL (136 mmol) of a 1.52 mol/Ln-butyllithium hexane solution was dropwise added thereto over a period of 30 minutes while maintaining the reaction temperature to be at most -60°C, stirring was carried out at -70°C for 2 hours after completion of the dropwise addition, carbon dioxide gas was blown while maintaining the temperature to be at most -60°C, and after heat generation disappeared, the temperature was raised to room temperature while blowing of carbon dioxide gas was continued.

Then, diluted hydrochloric acid was added to the reaction solution, the organic phase was separated, the aqueous phase was extracted with methyl-t-butyl ether, the ether layer and the organic phase were put together, washed with water and saturated salt solution, and dried over anhydrous sodium sulfate, and the solvent was distilled off to obtain crystals of a crude product. The crystals were recrystallized from toluene to obtain 31.2 g (88.5 mmol) of (R)-2,6-difluoro-4-(4-(2-phenylpropyl)phenyl)benzoic acid [H-Ph-CH($CH_3$)-$CH_2$-Ph-$Ph^{FF}$-COOH] as white crystals (yield: 78%).

Fourth step

Into a 300 mL eggplant-type flask, 30.0 g (85.1 mmol) of (R)-2,6-difluoro-4-(4-(2-phenylpropyl)phenyl)benzoic acid [H-Ph-CH($CH_3$)-$CH_2$-Ph-$Ph^{FF}$-COOH] obtained in third step, 120 mmol of tetrachloroethylene and 20.3 g (170 mmol) of thionyl chloride were put, followed by stirring at 90°C for 4 hours, and excess of thionyl chloride and tetrachloroethylene were distilled off under reduced pressure to obtain 32.5 g of (R)-2,6-difluoro-4-(4-(2-phenylpropyl)phenyl) benzoyl chloride [H-Ph-CH($CH_3$)-$CH_2$-Ph-$Ph^{FF}$-COCl].

Into a 500 mL four-necked flask, 73 mL of toluene and 26 mL of a 25% ammonium water were put and cooled to 10°C, a solution having 32.5 g of (R)-2,6-difluoro-4-(4-(2-phenylpropyl)phenyl)benzoyl chloride [H-Ph-CH ($CH_3$)-$CH_2$-Ph-$Ph^{FF}$-COCl] dissolved in 133 mL of toluene was dropwise added thereto over a period of 30 minutes while maintaining the temperature to be at most 15°C, and stirring was carried out at room temperature for 1 hour after completion of the dropwise addition. The precipitated crystals of (R)-2,6-difluoro-4-(4-(2-phenylpropyl)phenyl)benzamide [H-Ph-CH($CH_3$)-$CH_2$-Ph-$Ph^{FF}$-$CONH_2$] were collected by filtration from the reaction solution, and the crystals were washed with water.

Into a 500 mL four-necked flask, crystals of (R)-2,6-difluoro-4-(4-(2-phenylpropyl)phenyl)benzamide [H-Ph-CH ($CH_3$)-$CH_2$-Ph-$PH^{FF}$-$CONH_2$] and 142 mL of toluene were put, azeotropic dehydration was carried out by using Dean-Stark under reflux with heating, and 24.3 g (128 mmol) of p-toluenesulfonic chloride and 20.2 g (255 mmol) of pyridine were added thereto, followed by stirring under reflux with heating for 20 hours.

Then, water was added to the reaction solution to separate the organic layer, the aqueous layer was extracted with toluene, the toluene layer and the organic layer were put together and washed with diluted hydrochloric acid, a 5% sodium hydroxide aqueous solution was added thereto, followed by stirring at room temperature overnight, and then the aqueous layer was separated, washed with saturated salt solution and dried over anhydrous magnesium sulfate, and the solvent was distilled off to obtain a crude product. The crude product was purified by silica gel column chromatography (developing solvent: hexane) and recrystallized from ethanol to obtain 18.7 g (56.2 mmol) of (R)-2,6-difluoro-4-(4-(2-phenylpropyl)phenyl)benzonitrile [H-Ph-CH($CH_3$)-$CH_2$-Ph-$Ph^{FF}$-CN] as white crystals (yield: 66%).

H-Ph-CH($CH_3$)-$CH_2$-Ph-$Ph^{FF}$-CN)

Melting point: 60.7 to 62.2°C
MS m/e: 333 ($M^+$)
$^1$H-NMR ($CDCl_3$) δ (ppm : from TMS) : 1.28 (d, 3 H), 2.82-2.91 (m, 1 H), 2.95-3.07 (m, 2 H), 7.16-7.31 (m, 9 H), 7.42 (d, 2 H)
$^{19}$F-NMR ($CDCl_3$) δ (ppm : from $CFCl_3$) : -104.3 (d, $J_{F-H}$=9.2 Hz)

EXAMPLE 4-4

Preparation of (R)-2-fluoro-4-(4-(2-phenylpropyl)phenyl)benzotrifluoride [H-Ph-CH($CH_3$)-$CH_2$-Ph-$Ph^F$-$CF_3$]

A reaction was carried out in the same manner as in second step of Example 3 except that 40.4 g (167 mmol) of 4-bromo-2-fluorobenzotrifluoride was used instead of 1-bromo-3,5-difluorobenzene in second step of Example 4-3 to obtain 34.6 g (96.6 mmol) of (R)-2-fluoro-4-(4-(2-phenylpropyl)phenyl)benzotrifluoride [H-Ph-CH($CH_3$)-$CH_2$-Ph-$Ph^F$-$CF_3$] (yield: 58%).
MS m/e: 358 ($M^+$)

EXAMPLE 4-5

Preparation of (R)-2,6-difluoro-4-(2,6-difluoro-4-(2-phenylpropyl)phenyl)benzonitrile [H-Ph-CH ($CH_3$)-$CH_2$-$Ph^{FF}$-$Ph^{FF}$-CN]

First step

A reaction was carried out in the same manner as in first step of Example 4-1 except that 64.3 g (333 mmol) of 1-bromo-3,5-difluorobenzene was employed instead of 1-bromo-4-chlorobenzene in first step of Example 4-1 to obtain 31.2 g (127 mmol) of (S)-1-(3,5-difluorophenyl)-2-phenylpropane-1-one [H-Ph-CH($CH_3$)-CO-$Ph^{FF}$-H] (yield: 38%). MS m/e: 246 ($M^+$)

Second step

A reaction was carried out in the same manner as in first step of Example 4-1 except that 31.0 g (126 mmol) of (S)-1-(3,5-difluorophenyl)-2-phenylpropane-1-one [H-Ph-CH($CH_3$)-CO-$Ph^{FF}$-H] prepared in first step was employed instead of (S)-1-(4-chlorophenyl)-2-phenylpropane-1-one (H-Ph-CH($CH_3$)-CO-Ph-Cl) in second step of Example 4-1 to obtain 25.4 g (110 mmol) of (R)-1-(3,5-difluorophenyl)-2-phenylpropane [H-Ph-CH($CH_3$)-$CH_2$-$Ph^{FF}$-H] (yield: 87%)
MS m/e: 232 ($M^+$)

Third step

Into a 300 mL four-necked flask, 15.0 g (64.6 mmol) of (R)-1-(3,5-difluorophenyl)-2-phenylpropane [H-Ph-CH ($CH_3$)-$CH_2$-$Ph^{FF}$-H] obtained in second step and 75 mL of anhydrous tetrahydrofuran were put and cooled to -70°C in an atmosphere of nitrogen, and 51 mL (77.5 mmol) of a 1.52 mol/Ln-butyllithium hexane solution was dropwise added thereto over a period of 30 minutes while maintaining the reaction temperature to be at most -60°C, stirring was carried out at -70°C for 2 hours after completion of the dropwise addition, a solution having 8.72 g (140 mmol) of trimethylborate dissolved in 17.4 mL of anhydrous tetrahydrofuran was dropwise added thereto over a period of 30 minutes while maintaining the temperature to be at most -60°C, and the temperature was raised to room temperature after completion of the dropwise addition, followed by stirring at room temperature overnight.
Diluted hydrochloric acid was added to the reaction solution, followed by stirring at room temperature for 1 hour, and then an organic phase was separated, the aqueous phase was extracted with methyl-t-butyl ether, the ether layer and the organic phase were put together, washed with water and saturated salt solution, and dried over anhydrous sodium sulfate, and the solvent was distilled off to obtain 14.6 g (53.0 mmol) of (R)-2,6-difluoro-4-(2-phenylpropyl) phenylboric acid [H-Ph-CH($CH_3$)-$CH_2$-$Ph^{FF}$-B$(OH)_2$] (yield: 82%).

Fourth step

A reaction was carried out in the same manner as in second step of Example 3 except that 10.0 g (36.2 mmol) of (R)-2,6-difluoro-4-(2-phenylpropyl)phenylboric acid [H-Ph-CH($CH_3$)-$CH_2$-$Ph^{FF}$-B$(OH)_2$] obtained in third step was employed instead of (R)-4-(2-phenylpropyl)phenylboric acid [H-Ph-CH($CH_3$)-$CH_2$-Ph-B$(OH)_2$] in second step of Example 4-3 to obtain 6.11 g (17.7 mmol) of (R)-3,5-difluoro-1-(2,6-difluoro-4-(2-phenylpropyl)phenyl)benzene [H-Ph-CH ($CH_3$)-$CH_2$-$Ph^{FF}$-$Ph^{FF}$-H] (yield: 49%).
MS m/e: 344 ($M^+$)

Fifth step

A reaction was carried out in the same manner as in third step of Example 4-3 except that 6.00 g (17.4 mmol)

of (R)-3,5-difluoro-1-(2,6-difluoro-4-(2-phenylpropyl)phenyl)benzene [H-Ph-CH($CH_3$)-$CH_2$-$Ph^{FF}$-$Ph^{FF}$-H] obtained in fourth step was employed instead of (R)-3,5-difluoro-1-(4-(2-phenylpropyl)phenyl)benzene [H-Ph-CH($CH_3$)-$CH_2$-Ph-$Ph^{FF}$-H] in third step of Example 4-3 to obtain 5.48 g (14.1 mmol) of (R)-2,6-difluoro-4-(2,6-difluoro-4-(2-phenylpropyl) phenyl)benzoic acid [H-Ph-CH($CH_3$)-$CH_2$-$Ph^{FF}$-$Ph^{FF}$-COOH] (yield: 81%).

Sixth step

A reaction was carried out in the same manner as in fourth step of Example 4-3 except that 5.48 g (14.1 mmol) of (R)-2,6-difluoro-4-(2,6-difluoro-4-(2-phenylpropyl)phenyl)benzoic acid [H-Ph-CH($CH_3$)-$CH_2$-$Ph^{FF}$-$Ph^{FF}$-COOH] obtained in fifth step was employed instead of (R)-2,6-difluoro-4-(4-(2-phenylpropyl)phenyl)benzoic acid [H-Ph-CH ($CH_3$)-$CH_2$-Ph-$Ph^{FF}$-COOH] in fourth step of Example 4-3 to obtain 3.08 g (8.33 mmol) of (R)-2,6-difluoro-4-(2,6-difluoro-4-(2-phenylpropyl)phenyl)benzonitrile [H-Ph-CH($CH_3$)-$CH_2$-$Ph^{FF}$-$Ph^{FF}$-CN] (yield: 59%).
MS m/e: 369 ($M^+$)

EXAMPLE 4-6

Preparation of (R)-trans-1-(2,6-difluoro-4-(2-phenylpropyl)phenyl)-2-(3-fluoro-4-trifluoromethylphenyl)-1,2-difluoroethylene [H-Ph-CH($CH_3$)-$CH_2$-$Ph^{FF}$-CF=CF-$Ph^F$-$CF_3$]

Into a 200 mL four-necked flask, 10.0 g (43.1 mmol) of (R)-1-(3,5-difluorophenyl)-2-phenylpropane [H-Ph-CH ($CH_3$)-$CH_2$-$Ph^{FF}$-H] obtained in second step of Example 5 and 50 mL of anhydrous tetrahydrofuran were put and cooled to -70°C in an atmosphere of nitrogen, 34 mL (51.7 mmol) of a 1.52 mol/Ln-butyllithium hexane solution was dropwise added thereto over a period of 30 minutes while maintaining the reaction temperature to be at most -60°C, stirring was carried out at -70°C for 2 hours after completion of the dropwise addition, the solution having 10.5 g (43.1 mmol) of 2-fluoro-4-(1,1,2-trifluorovinyl)benzotrifluoride [$CF_2$=CF-$Ph^F$-$CF_3$] dissolved in 31.5 mL of anhydrous tetrahydrofuran was dropwise added thereto over a period of 30 minutes while maintaining the temperature to be at most -60°C, and the temperature was raised to room temperature after completion of the dropwise addition, followed by stirring at room temperature for 3 hours.

Diluted hydrochloric acid was added to the reaction solution, the organic phase was separated, the aqueous phase was extracted with toluene, the toluene layer and the organic phase were put together, washed with water, a sodium hydrogen carbonate aqueous solution and saturated salt solution, and dried over anhydrous magnesium sulfate, and the solvent was distilled off to obtain a crude product. The crude product was purified by silica gel column chromatography (developing solvent: hexane) to obtain 2.95 g (6.46 mmol) of (R)-trans-1-(2,6-difluoro-4-(2-phenylpropyl)phenyl)-2-(3-fluoro-4-trifluoromethylphenyl)-1,2-difluoroethylene [H-Ph-CH($CH_3$)-$CH_2$-$Ph^{FF}$-CF=CF-$Ph^F$-$CF_3$] (yield: 15%).
MS m/e: 456 ($M^+$)

EXAMPLE 4-7

Preparation of (R)-4-(2,6-difluoro-4-(2-phenylpropyl)phenyl)phenyl sulfur pentafluoride [H-Ph-CH($CH_3$)-$CH_2$-$Ph^{FF}$-Ph-$SF_5$]

A reaction was carried out in the same manner as in second step of Example 4-3 except that 3.08 g (10.9 mmol) of 4-bromophenyl sulfur pentafluoride [Br-Ph-$SF_5$] was employed instead of 1-bromo-3,5-difluorobenzene in second step of Example 4-3 and 3.00 g (10.9 mmol) of (R)-2,6-difluoro-4-(2-phenylpropyl)phenylboric acid [H-Ph-CH ($CH_3$)-$CH_2$-$Ph^{FF}$-B$(OH)_2$] obtained in third step of Example 4-5 was employed instead of (R)-4-(2-phenylpropyl)phenylboric acid [H-Ph-CH($CH_3$)-$CH_2$-Ph-B$(OH)_2$] to obtain 2.03 g (4.67 mmol) of (R)-4-(2,6-difluoro-4-(2-phenylpropyl)phenyl) phenyl sulfur pentafluoride [H-Ph-CH($CH_3$)-$CH_2$-$Ph^{FF}$-Ph-$SF_5$] (yield: 43%). MS m/e: 434($M^+$)

Preparation Example 1 for liquid crystal composition

To 100 parts by weight of a liquid crystal composition ZLI-1565 manufactured by Merck Ltd., 1 part by weight (C=0.01) of (4-cyano-3,5-difluoro)phenyl (R)-4-(2-phenylpropyl)benzoate [H-Ph-CH($CH_3$)-$CH_2$-Ph-COO-$Ph^{FF}$-CN] prepared in Example 4-1, 1 part by weight (C=0.01) of (4-cyano-3-fluoro)phenyl (R)-4-(2-phenylpropyl)benzoate [H-Ph-CH ($CH_3$)-$CH_2$-Ph-COO-$Ph^F$-CN] prepared in Example 4-2 and 1 part by weight (C=0.01) of (R)-2,6-difluoro-4-(4-(2-phenylpropyl)phenyl)benzonitrile [H-Ph-CH($CH_3$)-$CH_2$-Ph-$Ph^{FF}$-CN] prepared in Example 4-3 were added to obtain liquid crystal compositions (A), (B) and (C), respectively.

Comparative Preparation Example 1 for liquid crystal composition

1 Part by weight (C=0.01) of a commercially available optically active compound (CN) was added to 100 parts by weight of a liquid crystal composition ZLI-1565 manufactured by Merck Ltd. to obtain a liquid crystal composition (D), and 1 part by weight of a commercially available optically active compound (S-811) manufactured by Merck Ltd. was added to 100 parts by weight of ZLI-1565 to obtain a liquid crystal composition (E). The structures of the commercially available optically active compounds (CN) and (S-811) are shown in page 2.

Evaluation of helical twisting power

Of each of the liquid crystal compositions (A), (B), (C), (D) and (E), the helical pitch length P (unit: μm) at 25°C was measured by Cano wedge method. The helical twisting power HTP was calculated from the calculation formula 1. The direction of the helical twist was measured by a contact method. The results are shown in Table 4-1.

$$HTP=1/(P\cdot C) \qquad \text{Calculation Formula 1}$$

Table 4-1

| Composition | P (μm) | HTP (μm$^{-1}$) |
|---|---|---|
| (A) | 8.11 | 12.3 |
| (B) | 7.72 | 13.0 |
| (C) | 6.97 | 14.3 |
| (D) | 21.6 | 4.63 |
| (E) | 10.4 | 9.62 |

The helical twisting powers of the compounds prepared in Examples 4-1, 4-2 and 4-3 of the present invention were extremely high as compared with those of commercially available optically active compounds.

Preparation Example 2 for liquid crystal composition

To 95 parts by mol of a liquid crystal composition ZLI-1565 manufactured by Merck Ltd., 5 parts by mol of (4-cyano-3,5-difluoro)phenyl (R)-4-(2-phenylpropyl)benzoate [H-Ph-CH($CH_3$)-$CH_2$-Ph-COO-$Ph^{FF}$-CN] prepared in Example 4-1, 5 parts by mol of (4-cyano-3-fluoro)phenyl (R)-4-(2-phenylpropyl)benzoate [H-Ph-CH($CH_3$)-$CH_2$-Ph-COO-$Ph^{F}$-CN] prepared in Example 4-2 and 5 parts by mol of (R)-2,6-difluoro-4-(4-(2-phenylpropyl)phenyl)benzonitrile [H-Ph-CH($CH_3$)-$CH_2$-Ph-$Ph^{FF}$-CN] prepared in Example 4-3 were added to obtain liquid crystal compositions (F), (G) and (H), respectively.

Comparative Preparation Example 2 for liquid crystal composition

5 parts by mol of a commercially available optically active compound (CB-15) was added to 95 parts by mol of a liquid crystal composition ZLI-1565 manufactured by Merck Ltd. to obtain a liquid crystal composition (I). The structure of the commercially available optically active compound (CB-15) is shown in page 2.

Measurement of dielectric anisotropy (Δε)

Of the liquid crystal compositions (F), (G), (H) and (I), the N-I transition temperature Tc (K) was measured by using a polarization microscope. The results are shown in Table 4-2.

A liquid crystal cell having a cell gap D=8 μm was prepared by sandwiching each of the liquid crystal compositions (F), (G), (H) and (I) between substrates having a vertical alignment treatment applied to a base equipped with an ITO electrode. Of each of the cells, the dielectric constant ε. in parallel with the molecular long axis at 1 kHz at 0.85 Tc (K) was measured by using a LCR meter (4263B, manufactured by Hewlett-Packard Company). Further, a liquid crystal cell having a cell gap D=8 μm was prepared by sandwiching each of the liquid crystal compositions (F), (G), (H) and (I)

between substrates having a parallel alignment treatment applied similarly, and of each of the cells, the dielectric constant $\varepsilon_{\perp}$ vertical to the molecular long axis at 1 kHz at 0.85 Tc (K) was measured by using a LCR meter (4263B, manufactured by Hewlett-Packard Company). The dielectric anisotropy ($\Delta\varepsilon$) was calculated from the calculation formula 2. The results are shown in Table 4-2.

$$\Delta\varepsilon=\varepsilon_{\parallel}-\varepsilon_{\perp} \qquad \text{Calculation Formula 2}$$

Table 4-2

| Composition | Tc (K) | $\Delta\varepsilon$ |
|---|---|---|
| (F) | 348.5 | 9.1 |
| (G) | 351.3 | 8.1 |
| (H) | 348.4 | 8.0 |
| (I) | 354.5 | 6.9 |

The dielectric anisotropy ($\Delta\varepsilon$) of each of the liquid crystal compositions (F), (G) and (H) containing the compounds prepared in Examples 4-1, 4-2 and 4-3 of the present invention was high as compared with the liquid crystal composition (I) containing the commercially available optically active compound (CB-15). Namely, the compounds (2), (3) and (4) of the present invention showed a high dielectric anisotropy ($\Delta\varepsilon$) as compared with the commercially available optically active compound (CB-15).

INDUSTRIAL APPLICABILITY

The liquid crystal composition containing the optically active compound of the present invention is a composition novel prior to filing of the present application, and is a liquid crystalline compound, and further, is useful as an optically active compound to be added to the above liquid crystal composition. Namely, it has a high helical twisting power, it provides a small helical pitch length induced, and at the same time, it has a low viscosity, and a liquid crystal element employing the liquid crystal composition of the present invention may have a high speed of response. Further, the liquid crystal composition employing the liquid crystal composition of the present invention has a high refractive index anisotropy ($\Delta n$), an extremely high transition temperature (Tc) from the liquid crystal phase to the isotropic phase, and has a low viscosity. Further, it is chemically stable, and is excellent in compatibility with another compound such as another liquid crystal or non-liquid crystal compound. Further, the liquid crystal composition employing the optically active compound of the present invention has such a characteristic that it has a high dielectric anisotropy ($\Delta\varepsilon$), and may be driven at a low voltage.

Accordingly, the addition amount of such an optically active compound is small when it is added to a liquid crystal composition, and thus substantially no increase in the viscosity, decrease in the speed of response, increase in the driving voltage or reduction of the operating temperature range will be caused. At the same time, substantially no decrease in Tc of the liquid crystal composition will be caused, and accordingly a liquid crystal electro-optical element can be driven even at a high temperature range.

Particularly, such an optically active compound having the above characteristics is extremely effective even by addition of a small amount when used for a cholesteric liquid crystal composition to which addition of a large amount of an optically active compound is required, and which is usually considered to have a low speed of response and a high driving voltage, and a liquid crystal display element having brightness and a high contrast can be obtained.

Further, when the liquid crystal composition containing the optically active compound of the present invention is employed to obtain a TN or STN liquid crystal display element, uniform twist alignment can be achieved, and when it is used for a reflective cholesteric liquid crystal element, an aimed reflection wavelength will be obtained.

Further, the liquid crystal composition containing the optically active acetylene derivative compound of the present invention may also be used for various modes such as an active matrix element, a polymer dispersion liquid crystal element, a GH liquid crystal element employing a polychromatic colorant and a ferroelectric liquid crystal element. Further, it may also be used for applications other than for display, such as a dimmer element, a dimmer window, an optical shutter, a polarization exchange element, a varifocal lens, an optical color filter, a colored film, an optical recording element and a temperature indicator.

## Claims

1. A liquid crystal composition containing at least an optically active compound of the following formula (4) ($C^*$ is asymmetric carbon): wherein $A^8$ is $CH_2$- or CO-,
each of $B^1$, $B^2$ and $B^3$ which are independent of one another, is -COO-, -OCO-, $-CH_2CH_2-$, $-CH_2O-$, $-OCH_2-$,-CF=CF-, $-CF_2O-$ or a single bond,
each of $D^1$ and $D^2$ which are independent of each other, is a non-substituted 1,4-phenylene group, a non-substituted trans-1,4-cyclohexylene group or a single bond,
$X^3$ is $-CH_3$, $-CHF_2$, $-CH_2F$, $-CF_3$ or a fluorine atom,
each of $Y^3$, $Y^4$, $Y^5$ and $Y^6$ which are independent of one another, is a fluorine atom or a hydrogen atom, provided

(4)

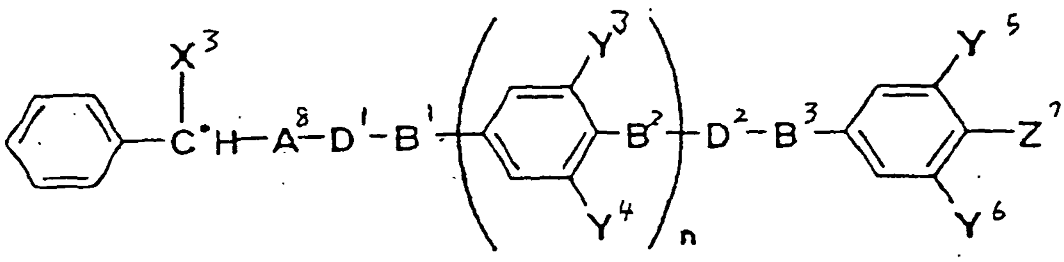

that one of $Y^3$, $Y^4$, $Y^5$ and $Y^6$ is a fluorine atom,
$Z^7$ is -CN, $-CF_3$, $-OCF_3$, $-SF_5$ or a fluorine atom, and
n is 0 or 1.

2. The liquid crystal composition according to Claim 1, wherein the compound of the formula (4) is an optically active compound of the following formula (11):

(1 1) 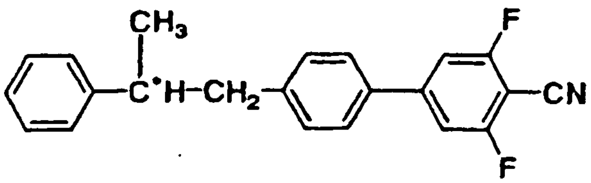

3. The liquid crystal composition according to Claim 1, wherein the compound of the formula (4) is an optically active compound of the following formula (12):

(1 2) 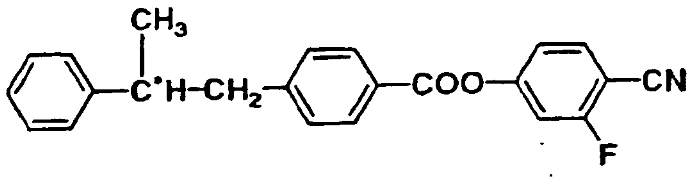

4. The liquid crystal composition according to Claim 1, wherein the compound of the formula (4) is an optically active compound of the following formula (13):

(1 3) 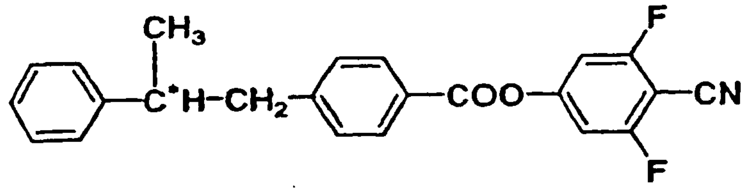

5. A liquid crystal electro-optical element, which comprises the liquid crystal composition as defined in any one of Claims 1 to 4 disposed between substrates having an electrode.

**Patentansprüche**

1. Flüssigkristallzusammensetzung, welche mindestens eine optisch aktive Verbindung der folgenden Formel (4) (C* ist ein asymmetrisches Kohlenstoffatom) enthält:

(4)

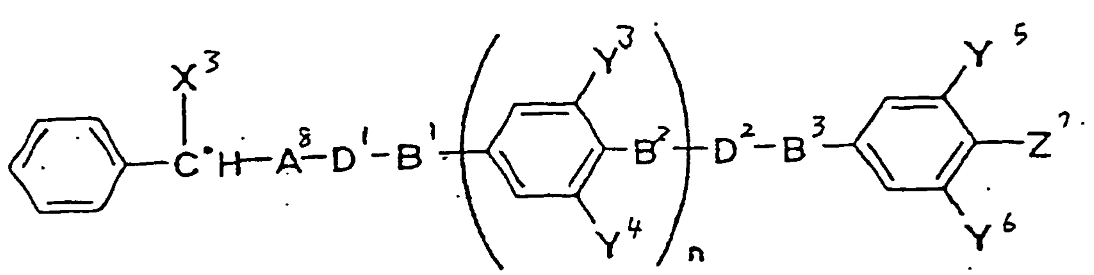

wobei $A^8$ $CH_2$- oder CO- ist,
jedes von $B^1$, $B^2$ und $B^3$, welche voneinander unabhängig sind, -COO-, -OCO-, $-CH_2CH_2-$, $-CH_2O-$, $-OCH_2-$, -CF=CF-, $-CF_2O-$ oder eine Einfachbindung ist,
jedes von $D^1$ und $D^2$, welche voneinander unabhängig sind, eine nicht-substituierte 1,4-Phenylengruppe, eine nicht-substituierte trans-1,4-Cyclohexylengruppe oder eine Einfachbindung ist,
$X^3$ $-CH_3$, $-CHF_2$, $-CH_2F$, $-CF_3$ oder ein Fluoratom ist,
jedes von $Y^3$, $Y^4$, $Y^5$ und $Y^6$, welche voneinander unabhängig sind, ein Fluoratom oder ein Wasserstoffatom ist, mit der Maßgabe, dass eines von $Y^3$, $Y^4$, $Y^5$ und $Y^6$ ein Fluoratom ist,
$Z^7$ -CN, $-CF_3$, $-OCF_3$, $-SF_5$ oder ein Fluoratom ist, und
n 0 oder 1 ist.

2. Flüssigkristallzusammensetzung nach Anspruch 1, wobei die Verbindung der Formel (4) eine optisch aktive Verbindung der folgenden Formel (11) ist:

(1 1) 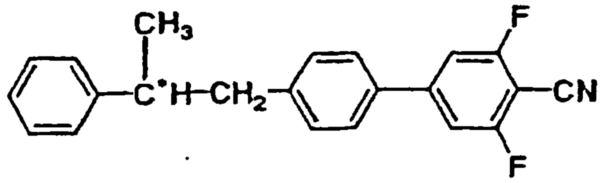

3. Flüssigkristallzusammensetzung nach Anspruch 1, wobei die Verbindung der Formel (4) eine optisch aktive Verbindung der folgenden Formel (12) ist:

(1 2) 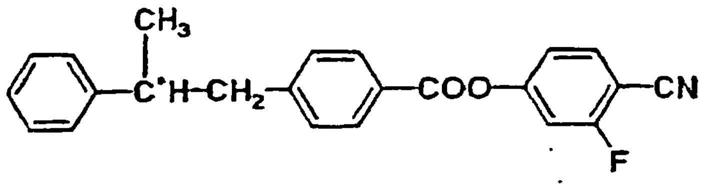

4. Flüssigkristallzusammensetzung nach Anspruch 1, wobei die Verbindung der Formel (4) eine optisch aktive Verbindung der folgenden Formel (13) ist:

(1 3) 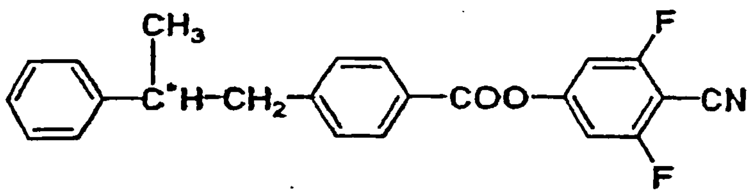

5. Elektrooptisches Flüssigkristallelement, welches die Flüssigkristallzusammensetzung nach einem der Ansprüche 1 bis 4, angeordnet zwischen Substraten mit einer Elektrode, umfasst.

**Revendications**

1. Composition de cristaux liquides contenant au moins un composé optiquement actif de formule (4) suivante (C* est un carbone asymétrique) :

(4)

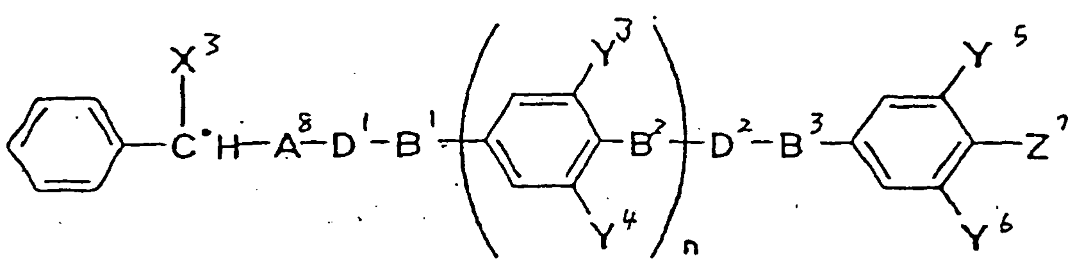

dans laquelle $A^8$ est $CH_2$- ou CO-,
chacun de $B^1$, $B^2$ et $B^3$, qui sont indépendants les uns des autres, est -COO-, -OCO-, $-CH_2CH_2-$, $-CH_2O-$, $-OCH_2-$, -CF=CF-, $-CF_2O-$ ou une liaison simple,
chacun de $D^1$ et $D^2$, qui sont indépendant l'un de l'autre, est un groupe 1,4-phénylène non substitué, un groupe trans 1,4-cyclohexylène non substitué ou une liaison simple,
$X^3$ est $-CH_3$, $-CHF_2$, $-CH_2F$, $-CF_3$ ou un atome de fluor,
chacun de $Y^3$, $Y^4$, $Y^5$ et $Y^6$, qui sont indépendants les uns des autres, est un atome de fluor ou un atome d'hydrogène, avec la réserve que l'un de $Y^3$, $Y^4$, $Y^5$ et $Y^6$ est un atome de fluor,
$Z^7$ est -CN, $-CF_3$, $-OCF_3$, $-SF_5$ ou un atome de fluor, et
n est 0 ou 1.

2. Composition de cristaux liquides selon la revendication 1, dans laquelle le composé de formule (4) est un composé optiquement actif de formule (11) suivante :

(1 1) 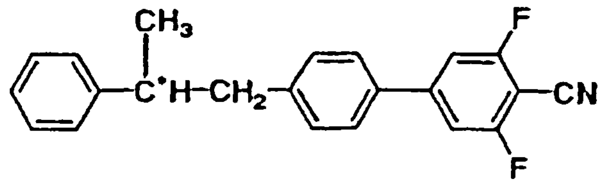

3. Composition de cristaux liquides selon la revendication 1, dans laquelle le composé de formule (4) est un composé optiquement actif de formule (12) suivante :

(1 2) 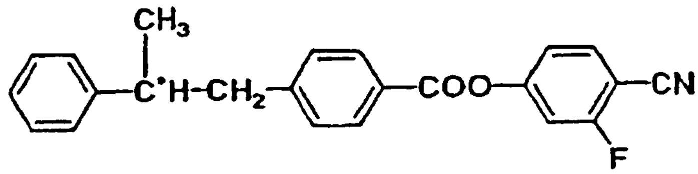

4. Composition de cristaux liquides selon la revendication 1, dans laquelle le composé de formule (4) est un composé optiquement actif de formule (13) suivante :

(1 3) 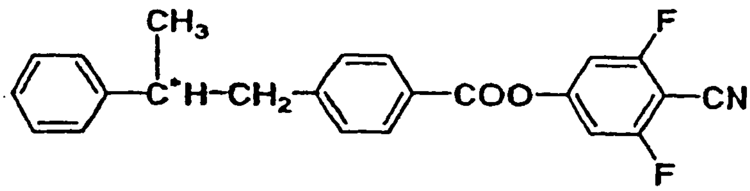

5. Elément électro-optique à cristaux liquides, qui comprend la composition de cristaux liquides telle que définie dans l'une quelconque des revendications 1 à 4, disposée entre des substrats ayant une électrode.